(19) Europäisches Patentamt
European Patent Office
Office européen des brevets

(11) **EP 2 639 623 B1**

(12) **EUROPEAN PATENT SPECIFICATION**

(45) Date of publication and mention
of the grant of the patent:
**05.05.2021 Bulletin 2021/18**

(51) Int Cl.:
*G02B 27/01* (2006.01)          *G02B 6/00* (2006.01)
*G02B 3/00* (2006.01)

(21) Application number: **13157856.9**

(22) Date of filing: **05.03.2013**

(54) **Image display device and image generating device**

Bildanzeigevorrichtung und Bilderzeugungsvorrichtung

Dispositif d'affichage d'image et dispositif de génération d'image

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2012 JP 2012057452**

(43) Date of publication of application:
**18.09.2013 Bulletin 2013/38**

(73) Proprietor: **Sony Corporation
Tokyo 108-0075 (JP)**

(72) Inventor: **Mukawa, Hiroshi
Minato-ku, Tokyo 108-0075 (JP)**

(74) Representative: **D Young & Co LLP
120 Holborn
London EC1N 2DY (GB)**

(56) References cited:
EP-A2- 2 065 751        US-A1- 2005 280 783
US-A1- 2005 281 029

## Description

BACKGROUND

The present disclosure relates to an image display device and an image generating device, and more particularly to an image display device suitable for use in a head mounted display (HMD), and an image generating device suitable for use in the image display device.

A virtual display device (image display device) for allowing an observer to observe a two-dimensional (2D) image formed by an image generating device as a virtual image enlarged by a virtual image optical system is well known, for example, from Japanese Patent Application Publication No. 2006-162767.

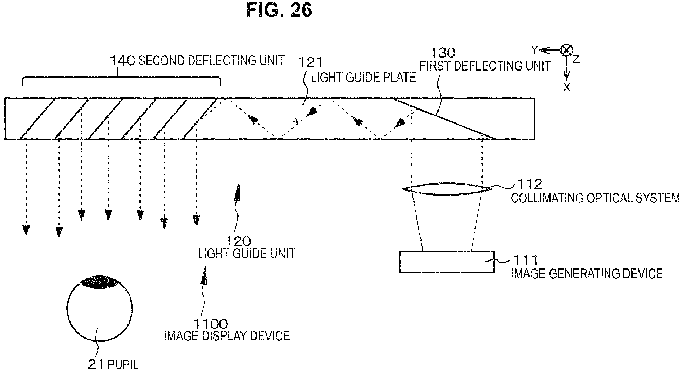

As illustrated in a conceptual diagram of FIG. 26, an image display device 1100 includes an image generating device 111 having a plurality of pixels arranged in a 2D matrix, a collimating optical system 112, which collimates light output from a pixel of the image generating device 111 into parallel light, and a light guide unit 120 on which the parallel light from the collimating optical system 112 is incident, through which the light is guided, and from which the light is output. The light guide unit 120 includes a light guide plate 121, which outputs the incident light after the incident light propagates through the inside according to total reflection, a first deflecting unit 130 (for example, including a light reflecting film of one layer), which reflects the light incident on the light guide plate 121 so that the light incident on the light guide plate 121 is totally reflected inside the light guide plate 121, and a second deflecting unit 140 (for example, including a light reflecting multi-film having a multi-layer laminated structure), which outputs from the light guide plate 121 the light propagating through the inside of the light guide plate 121 according to the total reflection. A weight and size of a device can be reduced, for example, when the HMD is formed according to such an image display device 1100.

Alternatively, in order to allow an observer to observe a 2D image formed by the image generating device as a virtual image enlarged by the virtual image optical system, a virtual image display device (image display device) using hologram diffraction gratings is well known, for example, from Japanese Patent Application Publication No. 2007-094175.

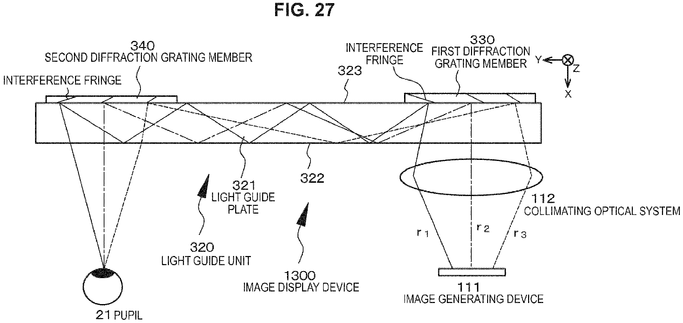

As illustrated in a conceptual diagram of FIG. 27, an image display device 1300 basically includes an image generating device 111, which displays an image, a collimating optical system 112, and a light guide unit 320 on which light displayed on the image generating device 111 is incident and through which the incident light is guided to a pupil 21 of the observer. Here, the light guide unit 320 includes a light guide plate 321 and a first diffraction grating member 330 and a second diffraction grating member 340 formed by reflective volume hologram diffraction gratings provided on the light guide plate 321. Light output from each pixel of the image generating device 111 is incident on the collimating optical system 112, and parallel light is generated by the collimating optical system 112 and incident on the light guide plate 321. The parallel light is incident on and output from a first surface 322 of the light guide plate 321. On the other hand, the first diffraction grating member 330 and the second diffraction grating member 340 are mounted on a second surface 323 of the light guide plate 321 parallel to the first surface 322 of the light guide plate 321.

    US 2005/0280783 relates to an image display device.
    US 2005/0281029 considers an illumination apparatus.
    EP 2065751 describes an image display device.

SUMMARY

Particular aspects are set out in the appended claims.

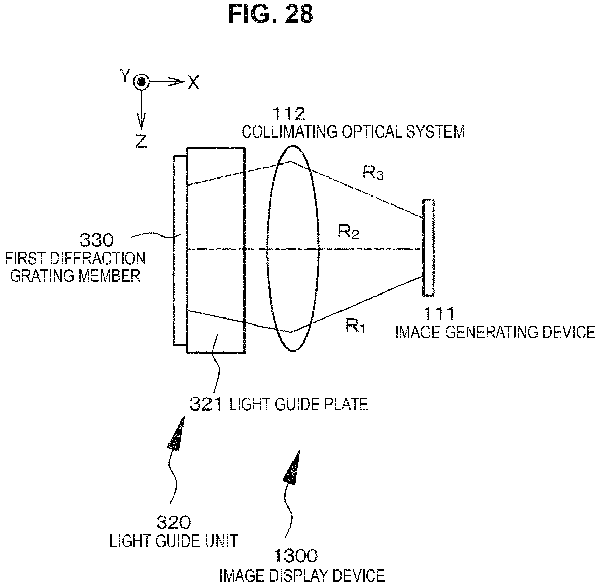

In some examples, the light output from the image generating device 111 becomes a group of parallel fluxes having different view angles (that is, output angles of light beams output from pixels of the image generating device 111) in the collimating optical system 112 on an XY plane illustrated in FIG. 27. The parallel flux group becomes a group of light fluxes having different view angles in an XZ plane orthogonal thereto, and is incident on the light guide plate 321. In FIG. 27, representative parallel light fluxes in the XY plane are indicated as parallel light flux $r_1$ (indicated by a solid line), $r_2$ (indicated by a dashed-dotted line) and $r_3$ (indicated by a dotted line). In FIG. 28, representative parallel light fluxes in the XZ plane are indicated as parallel light flux $R_1$ (indicated by a solid line), $R_2$ (indicated by a dashed-dotted line) and $R_3$ (indicated by a dotted line). In the illustrated image display device 1300, a left-right (horizontal) direction is set as a Y direction and an up-down (vertical) direction is set as a Z direction. That is, light for displaying a video, various types of information, and the like is guided from a lateral direction with respect to the pupil 21 of the observer, and incident on the pupil 21.

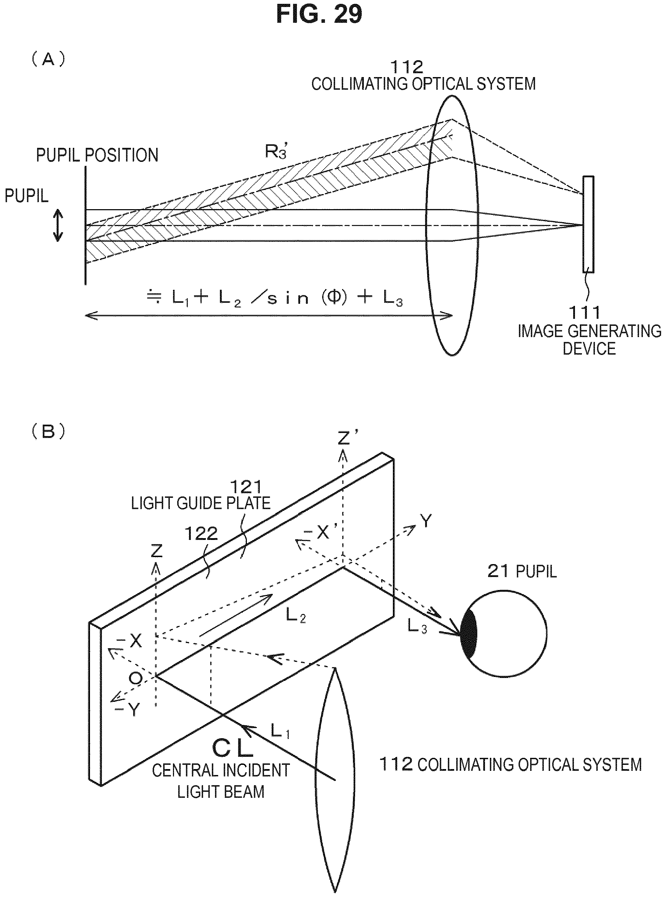

Incidentally, in this configuration, there are problems as will be described later due to a difference in behavior of parallel light flux in the XY plane of light guided through the inside of the light guide plate 321 and parallel light flux in the XZ plane. FIG. 29A is a diagram illustrating a problem in the image display device of the related art, and FIG. 29B is a diagram schematically illustrating a propagation state of light output from a center portion and an upper portion of the collimating optical system and guided through the light guide plate. FIG. 29A is a diagram schematically illustrating a propagation state of light, which is output from the image generating device and guided through the light guide unit, and reaches the pupil, within a plane corresponding to an inside of the XZ plane and the XY plane.

That is, in the above-described configuration, light incident from the first surface 322 of the light guide plate 321 is incident on the first diffraction grating member 330 disposed on the second surface 323. A distance from the center of the collimating optical system 112 to the center of the first diffraction grating member 330 is set as $L_1$, a distance from the center of the first diffraction grating member 330 to the center of the second diffraction grating member 340 is set as $L_2$, and a distance from the second diffraction grating member 340 to the pupil 21 is set as $L_3$.

In terms of an X direction component of the XY plane, the light fluxes $r_1$, $r_2$, and $r_3$ are diffracted and reflected by the first diffraction grating member 330, are guided inside the light guide plate 321 while being iteratively totally reflected between the first surface 322 and the second surface 323 in a state of parallel light fluxes, and move in a Y direction toward the second diffraction grating member 340 provided on the other end of the light guide plate 321. Parallel light of each view angle incident on the second diffraction grating member 340 is output from the light guide plate 321 under a total reflection condition according to diffraction reflection and incident on the pupil 21 of the observer. Here, in a travelling direction of the parallel light fluxes, the number of reflections within the light guide plate 321 differs according to a view angle. That is, an optical path length is different. However, because all light fluxes to propagate are parallel light fluxes, a light flux group moves to be folded. Accordingly, in terms of light of an X direction component of the XY plane, a substantial distance from the center of the collimating optical system 112 to the pupil 21 becomes $(L_1+L_3)$ because the distance $L_2$ from the center of the first diffraction grating member 330 to the center of the second diffraction grating member 340 can be neglected. In addition, this system can be generally regarded as a telecentric optical system, and a position of the first diffraction grating member 330 becomes an exit pupil position in terms of light of the X direction component of the XY plane.

On the other hand, although the X direction component is iteratively reflected within the light guide plate 321 in terms of incident light beams $R_1$, $R_2$, and $R_3$ in the XZ plane, a Z direction component reaches the second diffraction grating member 340 without being reflected. That is, light output from the collimating optical system 112 converges in the XZ plane to be incident from the first surface 322 and moves in the Y direction inside the light guide plate 321. These light fluxes move while being reflected by the first surface 322 and the second surface 323 of the light guide plate 321 so that the light fluxes are narrow in the Z direction, and reach the second diffraction grating member 340. The light fluxes are reflected, diffracted, and output by the second diffraction grating member 340 and incident on the pupil 21 of the observer. That is, in terms of light of the Z direction component of the XZ plane, a substantial distance from the center of the collimating optical system 112 to the pupil 21 generally becomes $(L_1+L_2/\mathrm{Sin}(\Phi)+L_3)$ when it is nec-

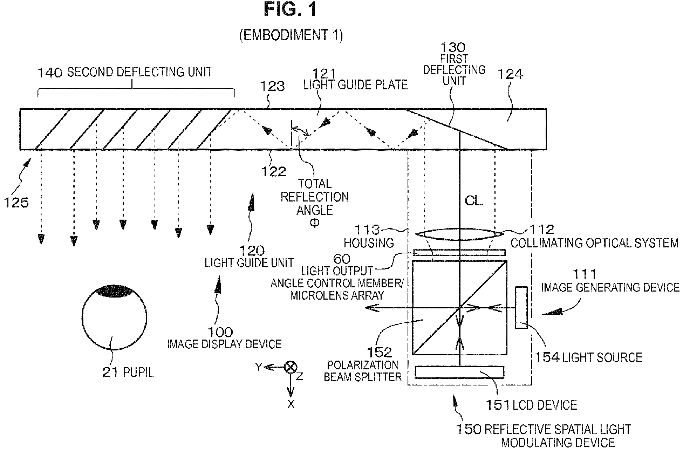

essary to consider the distance $L_2$ from the center of the first diffraction grating member 330 to the center of the second diffraction grating member 340 and a total reflection angle is $\Phi$ as illustrated in FIG. 1. In addition, in terms of light of the Z direction component of the XZ plane in a non-telecentric optical system, a position of the pupil 21 or a position in the vicinity of the pupil 21 becomes an exit pupil position.

Therefore, although light of a spatial region having diagonal lines from the top right to the bottom left reaches the pupil 21, for example, in terms of incident light $R_3$', as illustrated in FIG. 29A, light of a spatial region having diagonal lines from the top left to the bottom right does not reach the pupil 21. That is, part of light flux does not reach the pupil 21, and a type of vignetting occurs. In other words, there are problems that the utilization efficiency of light output from the image generating device 111 is low and that the low utilization efficiency of light leads to an increase in power consumption in the image generating device 111.

For example, as is well known from Japanese Patent Application Publication No. 10-170859, an image display device displays an image on a display surface formed by a plurality of pixels of an image generating unit, guides light flux output from the image transmitted and illuminated by an illuminating unit to the pupil of the observer via an optical system, and allows the observer to view a virtual image of the image formed by the light flux. In this image display device, light flux output from each pixel is incident on the optical system as light flux of a divergence angle different between a first direction and a second direction by setting the first direction and the second direction substantially orthogonal to the first direction within a plane on which the virtual image is formed and controlling divergence angles of the first direction and the second direction using a divergence angle conversion unit provided in the vicinity of each pixel for every pixel. However, it is difficult to solve a problem that the utilization efficiency of light is low even when light flux of a divergence angle different between the first direction and the second direction is incident on the optical system as described above.

It is desirable to provide an image display device having a configuration and structure that can improve the utilization efficiency of light output from the image generating device and further reduce power consumption in an image generating device and an image generating device suitable for use in the image display device.

In accordance with an embodiment of the present disclosure, there is provided an image display device including:

(A) an image generating device; and
(B) a light guide unit on which light from the image generating device is incident, through which the light is guided, and from which the light is output toward a pupil of an observer.

The image generating device of the present disclosure has the light guide unit, which includes
a light guide plate from which the incident light is output after the incident light propagates through an inside according to total reflection,
a first deflecting unit configured to deflect the light incident on the light guide plate so that the light incident on the light guide plate is totally reflected inside the light guide plate, and
a second deflecting unit configured to deflect the light propagating through the inside of the light guide plate according to the total reflection a plurality of times so that the light propagating through the inside of the light guide plate according to the total reflection is output from the light guide plate. The term "total reflection" unit internal total reflection or total reflection inside the light guide plate. Hereinafter, the same is also true.

In the image display device of the present disclosure or the image generating device of the present disclosure, when a point at which light output from a center of the image generating device is incident on the light guide unit is set as a point O, a normal line passing through the point O in a portion of the light guide unit is set as an X axis, an axis of the light guide unit passing through the point O in a portion of the light guide unit is set as a Y axis, an optical axis of light incident at the point O of the light guide unit among light beams output from a center of the image generating device is set as a $\zeta$ axis, and a virtual plane including the $\zeta$ axis and the Y axis is set as a $\zeta Y$ plane, light output from the image generating device and incident at a point $(0, Y_1, Z_1)$ of the light guide unit forms an angle $\theta_Z$ with the $\zeta Y$ plane and forms an angle $\theta_Y$ with an XZ plane. When $Z_1 \neq 0$, $\theta_Z \neq \theta_Y$ is satisfied.

In the image display device or the image generating device of the present disclosure, when $Z_1 \neq 0$, $\theta_Z \neq \theta_Y$ is satisfied. Accordingly, part of light flux output from the light guide unit does not reach the pupil, the occurrence of a phenomenon that a type of vignetting occurs can be suppressed, and the utilization efficiency of light output from the image generating device can be improved. Consequently, power consumption in the image generating device can be reduced.

BRIEF DESCRIPTION OF THE DRAWINGS

Example implementations of the present teachings will now be described with reference to the accompanying figures, in which:

FIG. 1 is a conceptual diagram of an image display device of Embodiment 1;
FIGS. 2A and 2B are diagrams schematically illustrating a propagation state of light when viewed from an XZ plane and a propagation state of light when viewed from an XY plane among light beams output from a light emitting unit positioned in an upper portion of an image generating device of Embodiment 1;
FIGS. 3A and 3B are diagrams schematically illustrating a propagation state of light when viewed from the XZ plane and a propagation state of light when viewed from the XY plane among light beams output from a light emitting unit positioned in a center portion of the image generating device of Embodiment 1;
FIG. 4A is a diagram schematically illustrating a propagation state of light, which is output from the image generating device of Embodiment 1 and guided through a light guide unit, and reaches a pupil, within a plane corresponding to an inside of the XZ plane and the XY plane;
FIG. 4B is a diagram schematically illustrating light output from each light emitting unit of the image generating device;
FIGS. 4C and 4D are diagrams illustrating a relationship between the light guide unit and a central incident light beam when the light guide unit is viewed from the side;
FIG. 5 is a schematic diagram of the image display device of Embodiment 1 viewed from above;
FIG. 6 is a schematic diagram of the image display device of Embodiment 1 viewed from the side;
FIG. 7 is a schematic diagram of the image display device of Embodiment 1 viewed from the front;
FIG. 8 is a diagram illustrating a state in which the image display device of Embodiment 1 is mounted on a head of an observer viewed from above (only the image display device is illustrated and the illustration of the frame is omitted);
FIG. 9 is a conceptual diagram of an image display device of Embodiment 2;
FIGS. 10A and 10B are conceptual diagrams of an image display device of Embodiment 3;
FIG. 11 is a conceptual diagram of an image display device of Embodiment 4 which is not part of the present invention;
FIG. 12 is a schematic diagram of an image display device of Embodiment 5 viewed from the side;
FIG. 13 is a schematic diagram of an image display device of Embodiment 6 viewed from the front;
FIG. 14 is a schematic diagram of an image display device of Embodiment 6 viewed from above;
FIG. 15 is a schematic diagram of an HMD of Embodiment 7 viewed from the front;
FIG. 16 is a schematic diagram of an HMD of Embodiment 7 (in a state in which a frame is assumed to be removed) viewed from the front;
FIG. 17 is a schematic diagram of the HMD of Embodiment 7 viewed from above;
FIG. 18 is a schematic diagram of an HMD of Embodiment 8 viewed from the front;
FIG. 19 is a schematic diagram of the HMD of Embodiment 8 (in a state in which a frame is assumed to be removed) viewed from the front;
FIG. 20 is a schematic diagram of the HMD of Embodiment 8 viewed from above;
FIG. 21 is a conceptual diagram of a modified example of an image generating device suitable for use in Embodiment 1 or 3;

FIG. 22 is a conceptual diagram illustrating another modified example of the image generating device suitable for use in Embodiment 1 or 3;

FIG. 23 is a conceptual diagram illustrating still another modified example of the image generating device suitable for use in Embodiment 1 or 3;

FIG. 24 is a conceptual diagram illustrating still another modified example of the image generating device suitable for use in Embodiment 1 or 3;

FIG. 25 is a conceptual diagram illustrating still another modified example of the image generating device suitable for use in Embodiment 1 or 3;

FIG. 26 is a conceptual diagram of an image display device of the related art;

FIG. 27 is a conceptual diagram of the image display device of the related art having another form different from that illustrated in FIG. 26;

FIG. 28 is a conceptual diagram of the image display device of the related art of the form illustrated in FIG. 27 viewed from another direction;

FIG. 29A is a diagram illustrating a problem in the image display device of the related art;

FIG. 29B is a diagram schematically illustrating a propagation state of light that is output from a center portion and an upper portion of a collimating optical system and guided through a light guide plate; and

FIG. 30 is a schematic diagram of a form of image display device of the related art viewed from the side.

DETAILED DESCRIPTION

Hereinafter, although the present disclosure will be described based on embodiments with reference to the drawings, the present disclosure is not limited to the embodiments, and various numerical values and materials mentioned in the embodiments are exemplary.

In the image display device or image generating device of the present disclosure (hereinafter, these may be collectively referred to as the "image display device and the like of the present disclosure"), a value of $\theta_Y$ is constant regardless of a value of $Y_1$, and an absolute value of $\theta_Z$ can be increased when an absolute value of $Z_1$ is increased. In the image display device or the like of the present disclosure of a preferred form as described above, the absolute value of $\theta_Z$ can be formed to be increased monotonically or stepwise when the absolute value of $Z_1$ is increased. Although $\theta_Y$ is not specifically limited when the value of $\theta_Y$ is constant regardless of the value of $Y_1$, it is only necessary that, for example, $\theta_Y = 0$.

Further, the image display device and the like of the present disclosure of these forms can have a configuration in which:

the image generating device has a light emitting unit (light output unit) disposed in a 2D matrix, a microlens array in which a plurality of microlenses are arranged in a 2D matrix is disposed in the image generating device, light output from each light emitting unit is output from the image generating device through a microlens facing the light emitting unit, and shift amounts of an optical axis of the light emitting unit and an optical axis of the microlens facing the light emitting unit are defined based on a value of $(0, Y_1, Z_1)$. In this case, although the microlens is not limited, the microlens can be formed by a cylindrical lens or an anamorphic lens. In addition, in these cases, a radiation angle (divergence angle) $\omega_1$ of light output from the microlens can be configured to be less than a radiation angle (divergence angle) $\omega_0$ of light output from the light emitting unit.

Alternatively, the image display device and the like of the present disclosure of a preferred form as described above can have a configuration in which:

an image generating device is provided with a light output angle control member, and light is output from the image generating device to a light guide unit through the light output angle control member. In this case, there is provided a configuration in which:

the image generating device has light emitting units (light output units) arranged in a 2D matrix, the light output angle control member is formed by a microlens array in which a plurality of microlenses are arranged in a 2D matrix, and light output from each light emitting unit is output from the image generating device through a microlens facing the light emitting unit. Further, in this case, shift amounts of an optical axis of the light emitting unit and an optical axis of the microlens facing the light emitting unit can be configured to be defined based on a value of $(0, Y_1, Z_1)$. In these configurations, although the microlens is not limited, the microlens can be formed by a cylindrical lens or an anamorphic lens. A radiation angle (divergence angle) $\omega_1$ of light output from the microlens can be configured to be less than a radiation angle (divergence angle) $\omega_0$ of light output from the light emitting unit.

The microlens or microlens array can be manufactured through a well-known method. In addition, the optical axis of the microlens can be configured to be inclined based on a value of $(0, Y_1, Z_1)$ instead of shifting the optical axis of the light emitting unit and the optical axis of the microlens facing the light emitting unit based on the value of $(0, Y_1, Z_1)$. In this case, it is only necessary to appropriately design a curvature factor of a light output plane of the microlens.

Further, in the image display device of the present disclosure including a preferred form and configuration as described above, the light guide unit can include:

(B-1) a light guide plate from which the incident light is output after the incident light propagates through an inside according to total reflection,

(B-2) a first deflecting unit configured to deflect the light incident on the light guide plate so that the light incident on the light guide plate is totally reflected inside the light guide plate, and

(B-3) a second deflecting unit configured to deflect the light propagating through the inside of the light guide plate according to the total reflection a plurality of times so that the light propagating through the inside of the light guide plate according to the total reflection is output from the light guide plate.

Further, in the image display device and the like of the present disclosure including a preferred form and configuration as described above, for example, a liquid crystal display (LCD) device, an organic electro luminescence (EL) display device, an inorganic EL display device, or a light emitting element array in which a plurality of light emitting elements are arranged in a 2D matrix can be included as the image generating device. In this image display device, the image generating device can further include a parallel light outputting optical system formed by a collimating optical system that collimates light output from each light emitting unit (a pixel or a virtual pixel) and passing through the microlens array or the light output angle control member into parallel light, and light from the parallel light outputting optical system (collimating optical system) can be configured to be incident on the light guide unit. For convenience, this image generating device is referred to as the "first form of image generating device."

Alternatively, the image generating device includes
a light source,
a collimating optical system, which collimates light output from the light source into parallel light,
a scanning unit, which scans the parallel light output from the collimating optical system, and
a parallel light outputting optical system formed by a relay optical system, which relays the parallel light scanned by the scanning unit,
wherein light output from the scanning unit and passing through a microlens array or a light output angle control member can be configured to be incident on the parallel light outputting optical system (relay optical system) and light from the parallel light outputting optical system (relay optical system) can be configured to be incident on the light guide unit. For convenience, this image generating device is referred to as the "second form of image generating device." Light output from the scanning unit (optical points) is arranged in a 2D matrix in a space, and each optical point corresponds to a light emitting unit (a virtual pixel).

In addition, for example, an image generating device including a reflective spatial light modulating device and a light source; an imaging generating device including a transmissive spatial light modulating device and a light source; and an image generating device formed by a light emitting element array including light emitting elements such as an organic EL, an inorganic EL, and light emitting diodes (LEDs) can be included as the image generating device in the first form of image generating device. A light valve, for example, a transmissive or reflective LCD device such as liquid crystal on silicon (LCOS) or a digital micromirror device (DMD), can be included as the spatial light modulating device, and a light emitting element can be included as the light source. Further, the reflective spatial light modulating device can be formed by an LCD device and a polarization beam splitter that reflects part of light from the light source to guide the reflected part of the light to the LCD device and passes part of light reflected by the LCD device to guide the part of the light to the parallel light emitting optical system. As the light emitting element constituting the light source, a red light emitting element, a green light emitting element, a blue light emitting element, and a white light emitting element can be included. Alternatively, white light may be obtained by mixing red, green, and blue light beams output from the red light emitting element, the green light emitting element, and the blue light emitting element using the light pipe and performing luminance equalization. As the light emitting element constituting the light emitting element array, for example, there are examples of a semiconductor laser element, a solid-state laser, and an LED. The number of light emitting units (pixels or virtual pixels) may be determined based on specifications necessary for the image display device. As a specific value of the number of light emitting units, there are examples of 320×240, 432×240, 640×480, 854×480, 1024×768, and 1920×1080. As the parallel light outputting optical system (collimating optical system), there is an example of an optical system having positive optical power as a whole using a convex lens, a concave lens, a free-form surface prism, and a hologram lens independently or in combination. A light shielding member having an opening portion to prevent undesired light from being output from the parallel light outputting optical system may be disposed between the parallel light outputting optical system (the collimating optical system or relay optical system) and the light guide unit.

On the other hand, a light emitting element can be included as a light source in the second form of image generating device, and specifically include a red light emitting element, a green light emitting element, a blue light emitting element, and a white light emitting element. Alternatively, white light may be obtained by mixing red, green, and blue light beams output from the red light emitting element, the green light emitting element, and the blue light emitting element using the light pipe and performing luminance equalization. As the light emitting element, for example, there are examples of a semiconductor laser element, a solid-state laser, and an LED. In the second form of imaging generating device, the number of light emitting units (virtual pixels) may be determined based on specifications necessary for the image display device. As a specific value of the number of light emitting units (virtual pixels), there are examples of 320×240, 432×240, 640×480, 854×480, 1024×768, and 1920×1080. In addition, when the light source includes the red light emitting element, the green light emitting element, and the blue light emitting element, it is preferable to perform color synthesis, for example, using a cross prism. As the scanning unit, for example, a micro electro mechanical system (MEMS), which has a micro mirror rotatable in a 2D direction to horizontally and vertically scan light output from the light source, or a galvano mirror can be included. It is only necessary to form the relay optical system constituting the parallel light outputting optical system by a well-known relay optical system.

There are examples of the following configurations in addition to a combination of a backlight that emits white light as a whole, for example, as an image generating device or a light source including a light emitting element and a light valve, and an LCD device having a red light emitting pixel, a green light emitting pixel, and a blue light emitting pixel.

The image generating device A includes:

(α) a first image generating device formed by a first light emitting panel in which first light emitting elements for emitting blue light are arranged in a 2D matrix,

(β) a second image generating device formed by a second light emitting panel in which second light emitting elements for emitting green light are arranged in a 2D matrix,

(γ) a third image generating device formed by a third light emitting panel in which third light emitting elements for emitting red light are arranged in a 2D matrix, and

(δ) a unit (for example, a dichroic prism, which is also substantially the same as in the following description) for integrating light output from the first, second, and third image generating devices into one optical path,

wherein a light emitting/non-light-emitting state of each of the first, second, and third light emitting elements is controlled.

The image generating device B includes:

(α) a first image generating device formed by a first light emitting element for emitting blue light and a first light passage control device (which is a type of light valve, and, for example, formed by an LCD device, a DMD, or an LCOS, which is substantially the same as in the following description) for controlling passage/non-passage of the light output from the first light emitting element for emitting the blue light,

(β) a second image generating device formed by a second light emitting element for emitting green light and a second light passage control device (light valve) for controlling passage/non-passage of the light output from the second light emitting element for emitting the green light,

(γ) a third image generating device formed by a third light emitting element for emitting red light and a third light passage control device (light valve) for controlling passage/non-passage of the light output from the third light emitting element for emitting the red light, and

(δ) a unit for integrating light passing through the first, second, and third light passage control devices into one optical path,

wherein an image is displayed by controlling passage/non-passage of the light output from the light emitting elements using the light passage control devices. As a unit (light guide member) for guiding the light output from the first, second, and third light emitting elements to the light passage control device, there are examples of a light guide member, a microlens array, a mirror, a reflecting plate, and a condensing lens.

The image generating device C includes:

(α) a first image generating device formed by a first light emitting panel in which first light emitting elements for emitting blue light are arranged in a 2D matrix and a blue light passage control device (light valve) for controlling passage/non-passage of the output light output from the first light emitting element for emitting the blue light,

(β) a second image generating device formed by a second light emitting panel in which second light emitting elements for emitting green light are arranged in a 2D matrix and a green light passage control device (light valve) for controlling passage/non-passage of the output light output from the second light emitting panel,

(γ) a third image generating device formed by a third light emitting panel in which third light emitting elements for emitting red light are arranged in a 2D matrix and a red light passage control device (light valve) for controlling passage/non-passage of the output light output from the third light emitting panel, and

(δ) a unit for integrating light passing through the blue, green, and red light passage control devices into one optical path,

wherein an image is displayed by controlling passage/non-passage of the output light output from the first, second, and third light emitting panels using the light passage control devices (light valves).

The image generating device D is a field sequential color-display image generating device, and includes:

($\alpha$) a first image generating device having a first light emitting element for emitting blue light,

($\beta$) a second image generating device having a third light emitting element for emitting green light,

($\gamma$) a third image generating device having a second light emitting element for emitting red light,

($\delta$) a unit for integrating light output from the first, second, and third image generating devices into one optical path, and

($\varepsilon$) a light passage control device (light valve) for controlling passage/non-passage of light output from the unit for integration into the one optical path,

wherein an image is displayed by controlling passage/non-passage of the light output from the light emitting elements using the light passage control devices.

The image generating device E is also a field sequential color-display image generating device, and includes:

($\alpha$) a first image generating device formed by a first light emitting panel in which first light emitting elements for emitting blue light are arranged in a 2D matrix,

($\beta$) a second image generating device formed by a second light emitting panel in which second light emitting elements for emitting green light are arranged in a 2D matrix,

($\gamma$) a third image generating device formed by a third light emitting panel in which third light emitting elements for emitting red light are arranged in a 2D matrix,

($\delta$) a unit for integrating light output from the first, second, and third image generating devices into one optical path, and

($\varepsilon$) a light passage control device (light valve) for controlling passage/non-passage of light output from the unit for integration into the one optical path,

wherein an image is displayed by controlling passage/non-passage of the light output from the light emitting panels using the light passage control device.

The image generating device F is a passive or active matrix type of color-display image generating device, which displays an image by controlling a light-emitting/non-light-emitting state of each of first, second, and third light emitting elements.

The image generating device G is a field sequential color-display image generating device, which includes a light passage control device (light valve) for controlling passage/non-passage of light output from light emitting element units arranged in a 2D matrix, and displays an image by controlling a light-emitting/non-light-emitting state of each of first, second, and third light emitting elements in the light emitting element units in time division, and further controlling passage/non-passage of light output from the first, second, and third light emitting elements using the light passage control device.

Light, which is output from a center of the image generating device, passes through a nodal point of the image generating device of the parallel light emitting optical system, and is incident on the light guide unit, is referred to as a "central incident light beam." The central incident light beam is incident at a point O of the light guide unit. The point O may be referred to as the center point of the light guide unit. As described above, an axial line that passes through the center point of the light guide unit and is parallel to an axial direction of the light guide unit is set as a Y axis and an axial line that passes through the center point of the light guide unit and is consistent with a normal line of the light guide unit is set as an X axis.

A first deflecting unit can be configured to reflect light incident on the light guide plate, and a second deflecting unit can be configured to transmit and reflect light propagating through the inside of the light guide plate according to the total reflection a plurality of times. In this case, the first deflecting unit can be configured to function as a reflecting mirror, and the second deflecting unit can be configured to function as a semi-transmissive mirror. For convenience, this light guide unit is referred to as the "first form of light guide unit."

In this configuration, the first deflecting unit can include a light reflecting film (a type of mirror), which is formed of a metal including an alloy and reflects light incident on the light guide plate or a diffraction grating (for example, a hologram diffraction grating film) that diffracts the light incident on the light guide plate. In addition, the second deflecting unit can include a multi-layer laminated structure in which a plurality of dielectric laminated films are laminated, a semi-transmissive mirror, a polarization beam splitter, or a hologram diffraction grating film. Although the first or second deflecting unit is disposed inside the light guide plate (embedded inside the light guide plate), parallel light incident on the light guide plate is reflected or diffracted so that the parallel light incident on the light guide plate is totally reflected inside the light guide plate in the first deflecting unit. On the other hand, in the second deflecting unit, the parallel light propagating through the inside of the light guide plate according to the total reflection is reflected or diffracted a plurality of times, and output from the light guide plate in a state of parallel light.

Alternatively, the first deflecting unit can be configured to diffract light incident on the light guide plate, and the second deflecting unit can be configured to diffract light propagating through the inside of the light guide plate according to the total reflection a plurality of times. For convenience, this light guide unit is referred to as the "second form of light guide unit." In this case, the first deflecting unit and the second deflecting unit can be formed by diffraction grating elements. Further, the diffraction grating element can be formed by a reflective diffraction grating element or a transmissive diffraction grating element. Alternatively, one diffraction grating element can be formed by the reflective diffraction grating element and the other diffraction grating element can be formed by the transmissive diffraction grating element. A reflective volume hologram diffraction grating can be included as the reflective diffraction grating element. For convenience, the first deflecting unit formed by the reflective volume hologram diffraction grating may be referred to as a "first diffraction grating member," and the second deflecting unit formed by the reflective volume hologram diffraction grating may be referred to as a "second diffraction grating member." That is, the diffraction direction is the Y direction and interference fringes extend in the Z direction.

The image display device in accordance with the present disclosure can perform a single-color (for example, green) image display. When color image display is performed, P diffraction grating layers, each of which is formed by a reflective volume hologram diffraction grating, can be laminated to cause the first diffraction grating member or the second diffraction grating member to cope with diffraction/reflection of P types of light having P types (for example, P=3, that is, three types of red, green, and blue) of different wavelength bands (or wavelengths). Each diffraction grating layer is provided with interference fringes corresponding to one type of wavelength band (or wavelength). Alternatively, to cope with diffraction and reflection of P types of light having P types of different wavelength bands (or wavelengths), P types of interference fringes can be configured to be formed in the first diffraction grating member or the second diffraction grating member formed by one diffraction grating layer. Alternatively, for example, the angle of view can be divided into three equal parts, and the first diffraction grating member or the second diffraction grating member can be configured by laminating diffraction grating layers corresponding to angles of view. By adopting these configurations, it is possible to increase the diffraction efficiency and acceptable diffraction angle and optimize the diffraction angle when light beams having the wavelength bands (or wavelengths) are diffracted and reflected by the first diffraction grating member or the second diffraction grating member.

The first diffraction grating member and the second diffraction grating member can be formed of a photopolymer material. It is only necessary that the material and basic structure of the first diffraction grating member and the second diffraction grating member formed by the reflective volume hologram diffraction gratings be the same as those of the reflective volume hologram diffraction gratings of the related art. The reflective volume hologram diffraction grating refers to a hologram diffraction grating that diffracts and reflects only +1-order diffracted light. Although the diffraction grating member is provided with interference fringes extending from the inner side to the outer side of the diffraction grating member, a method of forming the interference fringes may be the same as adopted in the related art. Specifically, for example, it is only necessary that a material (e.g., a photopolymer material) constituting the diffraction grating member be irradiated with object light in a first predetermined direction on one side, a material constituting the diffraction grating member be simultaneously irradiated with reference light in a second predetermined direction on the other side, and interference fringes formed by the object light and the reference light be recorded in the material constituting the diffraction grating member. By appropriately selecting the first predetermined direction, the second predetermined direction, and wavelengths of the object light and the reference light, a desired pitch of the interference fringes and a desired slant angle of the interference fringes on the surfaces of the diffraction grating member can be obtained. The slant angle of the interference fringes refers to the angle formed between the surfaces of the diffraction grating member (or the diffraction grating layer) and the interference fringes. When the first diffraction grating member and the second diffraction grating member are formed by a laminated structure in which P diffraction grating layers, each of which is formed by a reflective volume hologram diffraction grating, are laminated, it is only necessary to separately manufacture P diffraction grating layers and then laminate (adhere) the P diffraction grating layers, for example, using an ultraviolet curing resin adhesive. In addition, the P diffraction grating layers may be formed by manufacturing one diffraction grating layer using an adhesive photopolymer material, and then adhering layers of the adhesive photopolymer material thereon in order to manufacture diffraction grating layers.

Alternatively, in the image display device in accordance with the present disclosure, the light guide unit can be formed by a semi-transmissive mirror on which light output from the image generating device is incident and from which the incident light is reflected and output toward the pupil of the observer. A structure in which the light output from the image generating device propagates through the air and is incident on the semi-transmissive mirror may be provided. For example, a structure in which the light output from the image generating device propagates inside a transparent member such as a glass plate or a plastic plate (specifically, a member formed of the same material as the material constituting the light guide plate to be described later) and incident on a semi-transmissive mirror may be provided. The semi-transmissive mirror may be mounted on the image generating device via the transparent member, and the semi-transmissive mirror may be mounted on the image generating device via a member separate from the transparent member.

In the first or second form of image display device, a plurality of parallel light beams formed by the parallel light outputting optical system including the collimating optical system or the relay optical system are incident on the light guide plate. The requirement for parallel light beams is based on the fact that it is necessary to store light wave-front information obtained when the light beams are incident on the light guide plate even after the light beams are output from the light guide plate via the first deflecting unit and the second deflecting unit. To generate a plurality of parallel light beams, specifically, for example, it is only necessary that the light output unit of the image generating device be positioned in a place (position) of the focal length of the parallel light emitting optical system. The parallel light outputting optical system has a function of converting position information of pixels or virtual pixels into angle information in the light guide unit.

In the image display device, the light guide plate has two parallel surfaces (first and second surfaces) extending in parallel to a light propagation direction (Y direction) according to internal total reflection of the light guide plate. When a surface of the light guide plate on which light is incident is an incidence surface of the light guide plate and a surface of the light guide plate from which light is output is an output surface of the light guide plate, both the incidence surface and the output surface of the light guide plate may be defined by the first surface, or the incidence surface of the light guide plate may be defined by the first surface and the output surface of the light guide plate may be defined by the second surface.

For example, the light guide plate can be formed of a glass material including optical glass such as quartz glass or BK7, or a plastic material (e.g., poly methyl methacrylate (PMMA), a polycarbonate resin, an acrylic resin, amorphous polypropylene resin, or a styrene resin including acrylonitrile styrene (AS) resin). The shape of the light guide plate is not limited to a flat plate, but may be curved.

According to the image display device of the present disclosure, for example, an HMD can be configured, a weight and size of the device can be reduced, the discomfort when the device is mounted can be significantly reduced, and manufacturing cost can be reduced.

The HMD includes:

(a) an eyeglass type frame to be mounted on an observer's head, and
(b) the image display device of the present disclosure. According to the HMD, the number of image display devices of the present disclosure may be one (monocular type) or two (binocular type). The light guide unit can be a semi-transmissive type (see-through type). Specifically, at least a portion of the light guide unit facing pupils (both eyes) of an observer is configured to be semi-transmissive (see-through), so that the outside scene can be viewed through the portion of the light guide unit.

A frame is formed by a front portion arranged on the front side of the observer, two temple portions pivotably mounted on both ends of the front portion via hinges, and an ear bend portion mounted on the tip end portion of each temple portion, and further includes nose pads. When the entire HMD is seen, an assembly of the frame and the nose pads has a structure that is substantially the same as that of ordinary glasses, except that there is no rim. The material constituting the frame may be a metal, alloy, or plastic, or a combination thereof and may be the same material as the material constituting ordinary glasses. The nose pads may also have a well-known configuration and structure.

From the viewpoint of design of the HMD or ease of wearing the HMD, it is preferable that wirings (signal lines, power lines, or the like) from one or two image generating devices be formed to extend from the tip end portion of the ear bend portion to the outside via the temple portion and the inside of the ear bend portion and to be connected to the control device (a control unit or a control circuit). Further, it is preferable to configure a form in which each image generating device includes a headphone unit, and a wiring for the headphone unit from each image generating device extends from the tip end portion of the ear bend portion to the headphone unit via the temple portion and the inside of the ear bend portion. Examples of the headphone unit are an inner-ear type of headphone unit and a canal type of headphone unit. More specifically, it is preferable to configure a form in which the wiring for the headphone unit from the tip end portion of the ear bend portion wraps around the rear side of the auricle (auditory capsule) and extends to the headphone unit.

In addition, in the HMD, an imaging device can be formed to be mounted on a center portion of the front portion. Specifically, the imaging device is formed by a solid-state imaging device, for example, formed by a CCD or a CMOS sensor and a lens. It is only necessary that a wiring extending from the imaging device be connected to one image display device, for example, through the back of the front portion and further included in a wiring extending from the image display device.

There is no limitation in the image display device in accordance with the present disclosure, and a central incident light beam can be configured to intersect the XY plane at an angle ($\theta_{Z0} \neq 0$ degrees) other than zero degrees, that is, an incidence angle $\theta_{Z0}$ for the XY plane (an XY plane incidence angle) can be configured to be $\theta_{Z0} \neq 0$ degrees. Accordingly, the limitation on the mounting angle of the image display device at the time of mounting of the image display device on a mounting portion of the eyeglass type frame can be reduced, and a high degree of freedom for design can be obtained. When the XY plane is assumed to be consistent with the horizontal plane, the angle $\theta_{Z0}$ at which the central incident light beam intersects the XY plane can be configured to be an elevation angle. That is, the central incident light beam may be configured to collide with the XY plane from the lower side of the XY plane toward the XY plane. In such a case, it is preferable that the XY plane intersect the vertical surface at an angle other than zero degrees, and it is more preferable that the XY plane intersect the vertical surface at an angle $\theta_{Z0}'$. Although the maximum value of the angle $\theta_{Z0}'$ is not limited, the maximum value can include 5 degrees. Here, the horizontal plane includes a line of sight (horizontal line of sight of an observer) when the observer views a target (for example, a target located at an infinite distance or the horizon) located in the horizontal direction and is a plane in which the two horizontally positioned pupils of the observer are included. In addition, the vertical plane is a plane perpendicular to the horizontal plane. Alternatively, the central incident light beams output from the light guide unit and incident on the pupils of the observer can be formed to form a depression angle when the observer views a target (for example, a target located at an infinite distance or the horizon) located in the horizontal direction. The depression angle for the horizontal plane, for example, can be in the range of 5 degrees to 45 degrees.

Where the HMD is the binocular type, it is preferable that the light guide unit further include:

a connecting member, which is disposed on the side of the center of the observer's face as a whole rather than the image generating device and interconnects the two image display devices,
wherein the connecting member is mounted on a side facing the observer in a center portion of a frame located between the two pupils of the observer, and
wherein a projected image of the connecting member is included in a projected image of the frame.

As described above, according to a structure in which the connecting member is mounted on the center portion of the frame located between the observer's two pupils, that is, when a structure in which the image display devices are directly mounted on the frame is not provided, a displacement (positional change) of the image generating device or the light guide unit is not caused by deformation of the frame even when the temple portions are expanded to the outside when the frame is mounted on the observer's head and hence the frame is deformed, or such displacement, if any, is very small. Therefore, it is possible to reliably prevent angles of convergence of left and right images from being changed. Moreover, because it is unnecessary to enhance the rigidity of the front portion of the frame, it is possible to avoid causing an increase in the weight of the frame, a decrease in design quality, or an increase in cost. In addition, because the image display devices are not directly mounted on the eyeglass type frame, the design, color and the like of the frame can be freely selected according to the observer's preference, there are few restrictions imposed on the design of the frame, so that the degree of freedom on a design basis is high. In addition, the connecting member is disposed between the observer and the frame, and moreover, the projected image of the connecting member is included in the projected image of the frame. In other words, the connecting member is hidden behind the frame when the HMD is viewed from the front side of the observer. Accordingly, high design quality can be given to the HMD.

It is preferable to mount the connecting member on a side facing the observer in a center portion of the front portion (corresponding to a portion of a bridge in an ordinary pair of eyeglasses) located between the two pupils of the observer.

Although the two image display devices are connected by the connecting member, the image generating devices can be specifically formed to be mounted on both end portions of the connecting member, respectively, so that the mounting state is adjustable. In this case, it is preferable that each of the image generating devices be located outside the observer's pupil. In such a configuration, further, it is desirable that the condition of $0.01 \times L \leq \alpha \leq 0.30 \times L$, preferably, $0.05 \times L \leq \alpha \leq 0.25 \times L$, the condition of $0.35 \times L \leq \beta \leq 0.65 \times L$, preferably, $0.45 \times L \leq \beta \leq 0.55 \times L$, and the condition of $0.70 \times L \leq \gamma \leq 0.99 \times L$, preferably $0.75 \times L \leq \gamma \leq 0.95 \times L$, be satisfied, where $\alpha$ is the distance between the mounting-portion center of the image generating device on one side and one end portion (one wraparound end piece) of the frame, $\beta$ is the distance from the center of the connecting member to the one end portion (one end piece) of the frame, $\gamma$ is the distance between the mounting-portion center of the image generating device on the other side and the one end portion (one end piece) of the frame, and L is the length of the frame. For the mounting of the image generating devices on both end portions of the connecting member, specifically, for example, the connecting member is provided with through-holes at three positions in each of the end portions thereof, the image generating devices are each provided with screw-engagement portions corresponding to the through-holes, and screws are passed through the through-holes and engaged with the screw-engagement portions provided in the image generating devices. A spring is inserted between each screw and the screw-engagement portion. The mounting state of the image generating device (the inclination of the image generating device relative to the connecting member) can be adjusted according to the fastening state of each of the screws.

Here, the mounting-portion center of the image generating device is a bisection point along an axial direction of the frame in an overlapping area in which the projected image of the image generating device obtained upon projection of the image generating device and the frame onto a virtual plane overlaps the projected image of the frame in a state in which the image generating device is mounted on the connecting member. In addition, the center of the connecting member is a bisection point along the axial direction of the frame in a portion in which the connecting member is in contact with the frame in a state in which the connecting member is mounted on the frame. The length of the frame is the length of the projected image of the frame when the frame is curved. The direction of projection is set as a direction perpendicular to the observer's face.

Alternatively, although the two image display devices are connected by the connecting member, the two light guide units can also be specifically formed to be connected by the connecting member. The two light guide units are manufactured in an integrated manner, and in such a case, the connecting member is mounted on the light guide unit manufactured in the integrated manner, but this form is also included in the form in which the connecting member connects the two light guide units. Where the distance between the center of the image generating device on one side and one end portion of the frame is $\alpha'$ and the distance between the center of the image generating device on the other side and the one end portion of the frame is $\gamma'$, it is desirable that the values of $\alpha'$ and $\gamma'$ also be substantially the same as the above-described values of $\alpha$ and $\gamma$. The center of the image generating device is a bisection point along the axial direction of the frame in a portion in which the projected image of the image generating device obtained upon projection of the image generating device and the frame onto a virtual plane overlaps the projected image of the frame in a state in which the image generating device is mounted on the light guide unit.

The shape of the connecting member is basically freely settable insofar as the projected image of the connecting member is included in the projected image of the frame, and, for example, can include a rod shape and an elongated plate shape. Also, examples of the material for forming the connecting member include metals, alloys, plastics, and combinations thereof.

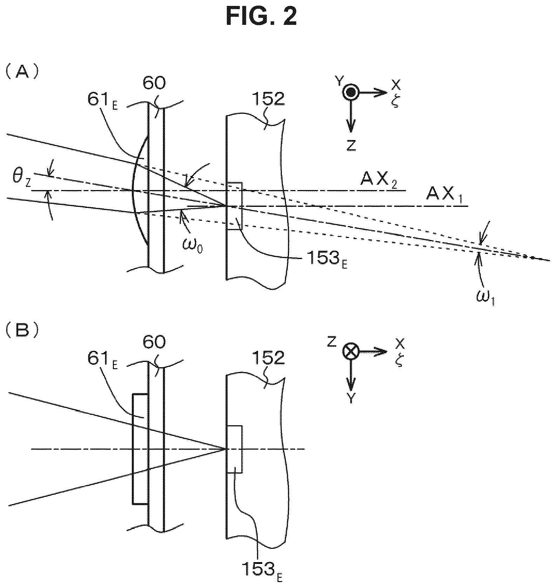

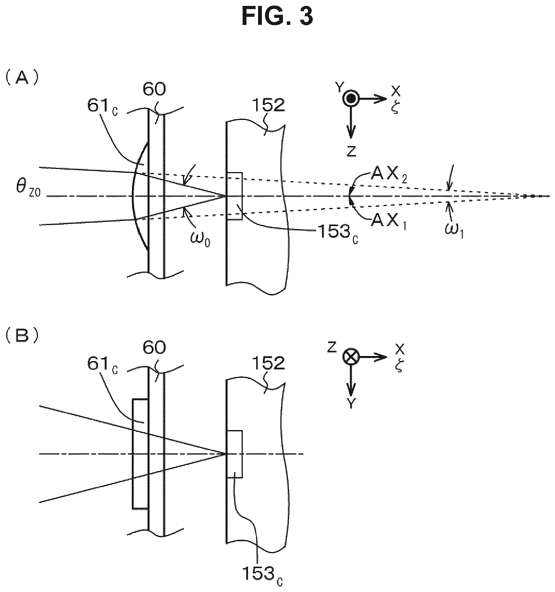

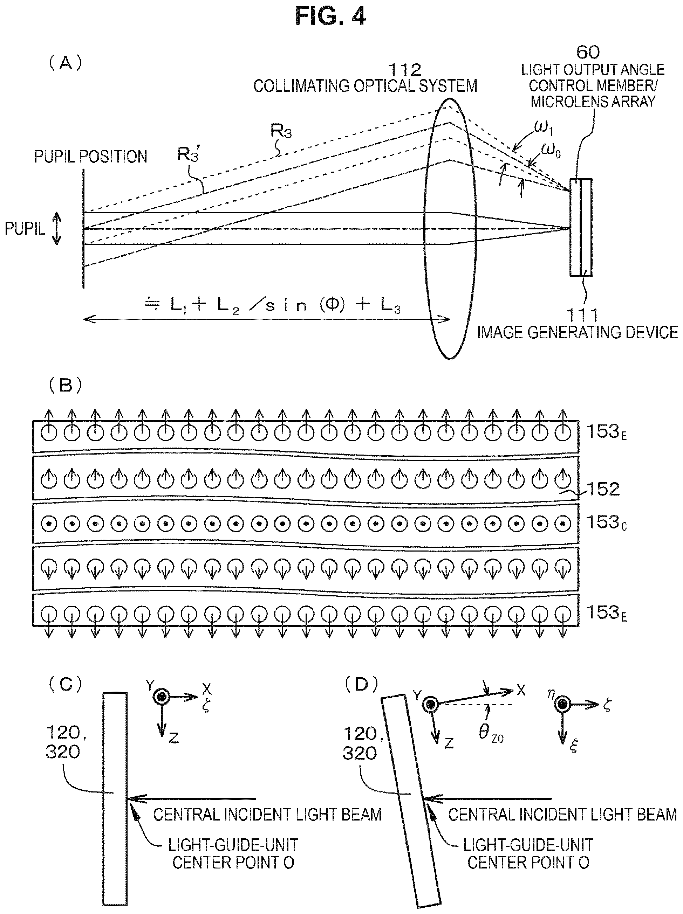

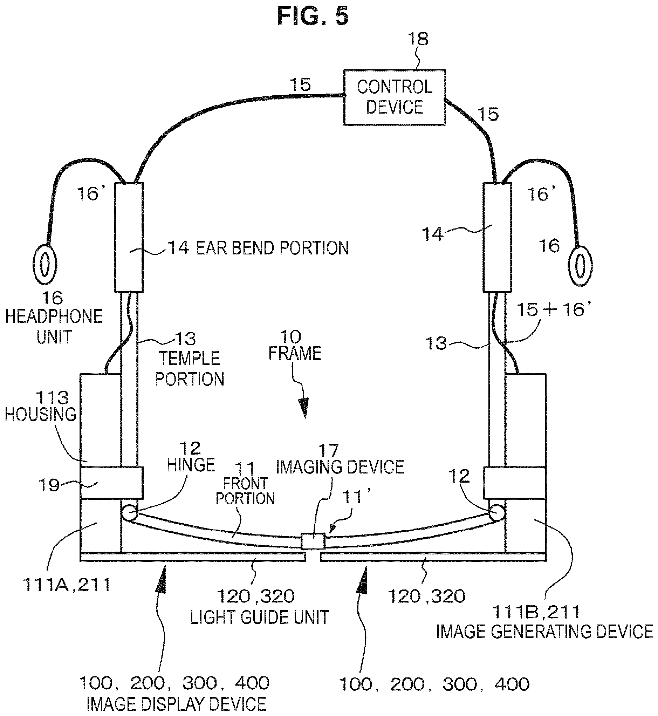

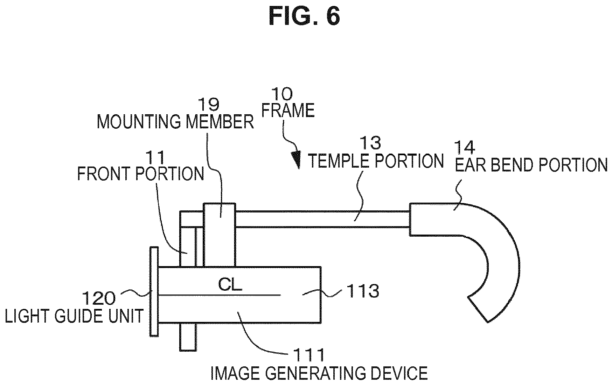

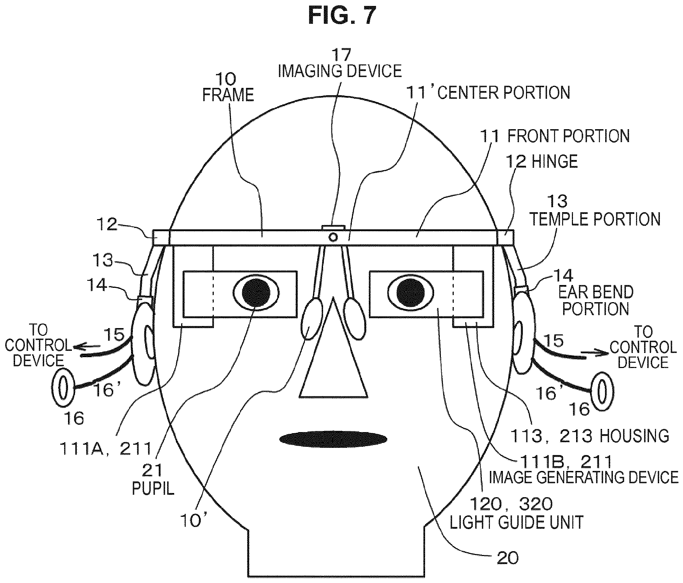

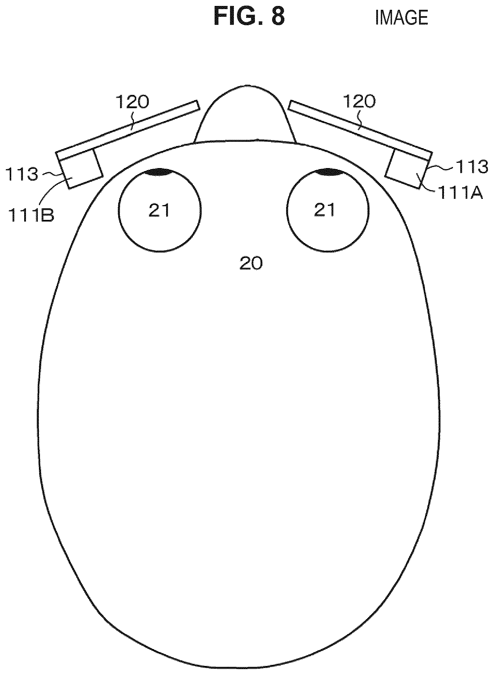

Embodiment 1 relates to an image display device and an image generating device of the present disclosure. Specifically, the image display device of Embodiment 1 includes the first form of image generating device/first form of light guide unit. Although a conceptual diagram of the image display device of Embodiment 1 is illustrated in FIG. 1, the image display device of Embodiment 1 is embedded in the HMD. In addition, a propagation state of light when viewed from an XZ plane and a propagation state of light when viewed from an XY plane among light beams output from a light emitting unit positioned in an upper portion of an image generating device of Embodiment 1 are schematically illustrated in FIGS. 2A and 2B. A propagation state of light when viewed from the XZ plane and a propagation state of light when viewed from the XY plane among light beams output from a light emitting unit positioned in a center portion of the image generating device of Embodiment 1 are schematically illustrated in FIGS. 3A and 3B. A propagation state of light, which is output from the image generating device of Embodiment 1 and guided through a light guide unit, and reaches a pupil, within a plane corresponding to an inside of the XZ plane is schematically illustrated in FIG. 4A. Light output from each light emitting unit of the image generating device is schematically illustrated in FIG. 4B. Diagrams illustrating a relationship between the light guide unit and a central incident light beam when the light guide unit is viewed from the side are illustrated in FIGS. 4C and 4D. Further, a schematic diagram of the image display device viewed from above is illustrated in FIG. 5. A schematic diagram of the image display device viewed from the side is illustrated in FIG. 6. A schematic diagram of the image display device of Embodiment 1 viewed from the front is illustrated in FIG. 7. A diagram illustrating a state in which the image display device of Embodiment 1 is mounted on a head of an observer viewed from above (only the image display device is illustrated and the illustration of the frame is omitted) is illustrated in FIG. 8.

An image display device 100, 200, 300, 400, or 500 of Embodiment 1 or any one of Embodiments 2 to 8 to be described later includes:

(A) an image generating device 111 or 211, and
(B) a light guide unit 120, 320, or 520 on which light from the image generating device 111 or 211 is incident, through which the light is guided, and from which the light is output toward a pupil 21 of an observer 20.

In addition, the image generating device 111 or 211 of Embodiment 1 is an image generating device that outputs light to the light guide unit 120, 320, or 520.

Here, an HMD includes:

(a) an eyeglass type frame 10 mounted on a head of the observer 20, and
(b) the image display device 100, 200, 300, 400, or 500. The number of image display devices may be one (monocular type) or two (binocular type). In the embodiment, there is a binocular type in which two image display devices are provided. The image display device 100, 200, 300, 400, or 500 may be fixedly attachable to or detachable from the frame. The image generating device 111 or 211 displays a single-color (for example, green) image. In addition, the light guide units 120, 320, and 520 are a semi-transmissive type (see-through type). Specifically, at least a portion (more specifically, a light guide plate 121 or 321 and a second deflecting unit 140 or 340 to be described later) of the light guide unit facing both pupils (eyes) 21 of the observer 20 is semi-transmissive (see-through).

Here, in Embodiment 1 or any one of Embodiments 2 to 8 to be described later, a point at which light (central incident light beam CL) output from the center of the image generating device 111 or 211, passing through the nodal point of the image generating device of the parallel light outputting optical system 112 or 254, and incident on the light guide unit 120, 320, or 520 is incident on the light guide unit 120, 320, or 520 is set as a point O (light-guide-unit center point O). A normal line that passes through the light-guide-unit center point O in a portion of the light guide unit 120, 320, or 520 is set as an X axis, and an axial line of the light guide unit 120, 320, or 520 that passes through the light-guide-unit center point O in a portion of the light guide unit 120, 320, or 520 is set as a Y axis. The center point of the first deflecting unit 130 or 330 to be described later is the light-guide-unit center point O. In addition, an optical axis of light incident at the point O (light-guide-unit center point O) of the light guide unit 120 or 320 among light beams output from the center of the image generating device 111 or 211 is set as a $\zeta$ axis. Here, a relationship between an (X, Y, Z) orthogonal coordinate system and a ($\zeta$, $\eta$, $\xi$) orthogonal coordinate system when the ($\zeta$, $\eta$, $\xi$) orthogonal coordinate system is assumed becomes a relationship in which the $\eta$ axis is consistent with the y axis, and the $\xi$ axis is consistent with the z axis when an (x, y, z) orthogonal coordinate system is assumed in a state in which the X axis is caused to be consistent with the $\zeta$ axis according to rotational movement. In Embodiments 1 to 4 and Embodiments 6 to 8, the $\zeta$ axis is consistent with the X axis, the $\eta$ axis is consistent with the Y axis, and the $\xi$ axis is consistent with the Z axis.

In Embodiment 1 or any one of Embodiments 2 to 5 and Embodiments 7 and 8 to be described later, the light guide unit 120 or 320 includes:

(B-1) a light guide plate 121 or 321 from which incident light is output after the incident light propagates through an inside according to total reflection,
(B-2) a first deflecting unit 130 or 330, which deflects light incident on the light guide plate 121 or 321 so that the light incident on the light guide plate 121 or 321 is totally reflected inside the light guide plate 121 or 321, and
(B-3) a second deflecting unit 140 or 340, which deflects light propagating through the inside of the light guide plate 121 or 321 according to the total reflection a plurality of times so that the light propagating through the inside of the light guide plate 121 or 321 according to the total reflection is output from the light guide plate 121 or 321.

In Embodiment 1, the first deflecting unit 130 and the second deflecting unit 140 are disposed inside the light guide plate 121. The first deflecting unit 130 reflects light incident on the light guide plate 121, and the second deflecting unit 140 transmits and reflects light propagating through the inside of the light guide plate 121 according to total reflection a plurality of times. That is, the first deflecting unit 130 functions as a reflecting mirror, and the second deflecting unit 140 functions as a semi-transmissive mirror. More specifically, the first deflecting unit 130 provided inside the light guide plate 121 includes a light reflecting film (a type of mirror) formed of aluminum (Al), which reflects light incident on the light guide plate 121. On the other hand, the second deflecting unit 140 provided inside the light guide plate 121 is formed by a multilayer laminated structure in which a plurality of dielectric laminated films are laminated. The dielectric laminated film is formed by, for example, a $TiO_2$ film as a high-dielectric-constant material and a $SiO_2$ film as a low-dielectric-constant material. A multi-layer laminated structure in which a plurality of dielectric laminated films are laminated is disclosed in Japanese Unexamined Patent Application Publication (Translation of PCT Application) 2005-521099. Although a six-layer dielectric laminated film is illustrated in the drawing, the present disclosure is not limited thereto. A thin section formed of the same material as the material constituting the light guide plate 121 is sandwiched between dielectric laminated films. In the first deflecting unit 130, the parallel light incident on the light guide plate 121 is reflected (or diffracted) so that the parallel light incident on the light guide plate 121 is totally reflected inside the light guide plate 121. On the other hand, in the second deflecting unit 140, the parallel light propagating through the inside of the light guide plate 121 according to total reflection is reflected (or diffracted) a plurality of times, and output toward the pupil 21 of the observer 20 in a state of parallel light from the light guide plate 121.

For the first deflecting unit 130, it is only necessary that a slant surface on which the first deflecting unit 130 is to be formed on the light guide plate 121 be provided by cutting out a portion 124 on which the first deflecting unit 130 of the light guide plate 121 is provided, and the cut-out portion 124 of the light guide plate 121 be adhered to the first deflecting unit 130 after a light reflecting film is vacuum evaporated on the slant surface. In addition, for the second deflecting unit 140, it is only necessary that a multilayer laminated structure in which a plurality of membranes of the same material (e.g., glass) as the material constituting the light guide plate 121 and a plurality of dielectric laminated films (for example, formable by vacuum evaporation) are laminated be manufactured, a slant surface be formed by cutting out a portion 125 on which the second deflecting unit 140 of the light guide plate 121 is provided, the multilayer laminated structure be adhered to the slant surface, and the external form be arranged by polishing or the like. Thereby, the light guide unit 120 having the first deflecting unit 130 and the second deflecting unit 140 provided inside the light guide plate 121 can be obtained.

Here, in Embodiment 1 or any one of Embodiments 2 to 5 and Embodiments 7 and 8 to be described later, the light guide plate 121 or 321 formed of an optical glass material or a plastic material has two parallel surfaces (a first surface 122 or 322 and a second surface 123 or 323) extending in parallel to the light propagating direction (Y direction) according to internal total reflection of the light guide plate 121 or 321. The first surface 122 or 322 and the second surface 123 or 323 face each other. Parallel light is incident from the first surface 122 or 322 corresponding to a light incidence surface, and the incident parallel light propagates through the inside according to total reflection and then is output from the first surface 122 or 322 corresponding to a light output surface. However, the present disclosure is not limited thereto, and the light incidence surface may be formed by the second surface 123 or 323, and the light output surface may be formed by the first surface 122 or 322.

In Embodiment 1 or 3 to be described later, the image generating device 111 is the first form of image generating device, which has a plurality of light emitting units (light output units, pixels, or virtual pixels) arranged in a 2D matrix. Specifically, the image generating device 111 includes a reflective spatial light modulating device 150 and a light source 154 formed by LEDs that emits white light. Each entire image generating device 111 is fitted inside a housing 113

(denoted by a dashed-dotted line in FIG. 1), and an opening portion (not illustrated) is provided in the housing 113, and light is output from the parallel light outputting optical system (collimating optical system 112) through the opening portion. The reflective spatial light modulating device 150 is formed by an LCD device (LCD) 151 formed by an LCOS as a light valve and a polarization beam splitter 152 that reflects part of the light output from the light source 154 to guide the reflected light to the LCD device 151 and passes part of light reflected by the LCD device 151 to guide the passed light to the collimating optical system 112. The liquid crystal display device 151 includes a plurality (for example, 640×480) of pixels (liquid crystal cells) arranged in a 2D matrix. The polarization beam splitter 152 has a well-known configuration and structure. Unpolarized light output from the light source 154 collides with the polarization beam splitter 152. The polarization beam splitter 152 passes and outputs a P-polarized component outside the system. On the other hand, an S-polarized component is reflected by the polarization beam splitter 152, incident on the LCD device 151, reflected inside the LCD device 151, and output from the LCD device 151. Here, a large number of P-polarized components are included in light output from pixels used for displaying "white" in the light output from the LCD device 151, and a large number of S-polarized components are included in light output from pixels used for displaying "black." Accordingly, the P-polarized component within the light that is output from the LCD device 151 and collides with the polarization beam splitter 152 passes through the polarization beam splitter 152 and is guided to the collimating optical system 112. On the other hand, the S-polarized component is reflected by the polarization beam splitter 152 and returned to the light source 154. The collimating optical system 112, for example, includes a convex lens. To generate parallel light, the light output unit of the image generating device 111 (more specifically, the LCD device 151) is disposed at a place (position) of a focal distance of the collimating optical system 112. In the case of a color display, one pixel includes a red light emitting sub-pixel for outputting red light, a green light emitting sub-pixel for outputting green light, and a blue light emitting sub-pixel for outputting blue light.

The frame 10 is formed by a front portion 11 arranged on the front side of the observer 20, two temple portions 13 pivotably mounted on both ends of the front portion 11 via hinges 12, and ear bend portions (also referred to as tip cells or ear pads) 14 mounted on tip end portions of the temple portions 13. In addition, nose pads 10' are mounted thereon. That is, the assembly of the frame 10 and the nose pads 10' has basically substantially the same structure as ordinary glasses. Further, each housing 113 is mounted on the temple portion 13 using a mounting member 19. The frame 10 is manufactured using metal or plastic. Each housing 113 may be attachable to or detachable from the temple portion 13 using the mounting member 19. Further, when the observer owns and wears glasses, each housing 113 may be attachable to or detachable from the temple portion of the frame of the glasses owned by the observer using the mounting member 19.

Further, wirings (signal lines, power lines, and the like) 15 extending from the image generating devices 111A and 111B extend from the tip end portion of the ear bend end portion 14 toward the outside via the temple portion 13 and the inside of the ear bend portion 14, and are connected to the control device (the control circuit or the control unit) 18. For example, an external image signal is wirelessly transmitted to the control device 18 or an image signal (image data) is stored in the control device 18. The control device 18 performs an image display process for an image signal. The control device 18 can include a well-known circuit. In addition, each of the image generating devices 111A and 111B has a headphone unit 16, and a headphone wiring 16' extending from each of the image generating devices 111A and 111B extends from the tip end portion of the ear bend portion 14 to the headphone unit 16 via the temple portion 13 and the inside of the ear bend portion 14. More specifically, the headphone wiring 16' extends from the tip end portion of the ear bend portion 14 so as to wrap around the rear side of the auricle (auditory capsule) and extends to the headphone unit 16. According to such a configuration, the image display device can be neatly formed without giving an impression that the headphone unit 16 and the headphone wiring 16' are cluttered.

In addition, an imaging device 17 having a solid-state imaging device formed by a CCD or CMOS sensor and a lens (these are not illustrated) are mounted on a center portion 11' of the front portion 11 using an appropriate mounting member (not illustrated), if necessary. A signal output from the imaging device 17 is transmitted to the image generating device 111A via a wiring (not illustrated) extending from the imaging device 17.

Incidentally, an optical axis of light (central incident light beams CL) incident at the point O (light-guide-unit center point O) of the light guide unit 120 or 320 among light beams output from the center of the image generating device 111 or 211 is set as the $\zeta$ axis, and a virtual plane including the $\zeta$ axis and the Y axis is set as the $\zeta$Y plane. Because the $\zeta$ axis is consistent with the X axis, the $\eta$ axis is consistent with the Y axis, and the $\xi$ axis is consistent with the Z axis as described above with reference to Embodiments 1 to 4 and Embodiments 6 to 8, the XY plane, the XZ plane, and YZ plane are consistent with the $\zeta\eta$ plane, the $\zeta\xi$ plane, and the $\eta\xi$ plane, respectively, and the $\zeta$Y plane is consistent with the XY plane. Then, light output from the image generating device 111 or 211 and incident at a point $(0, Y_1, Z_1)$ of the

light guide unit 120, 320, or 520 forms an angle $\theta_Z$ with the $\zeta Y$ plane (the XY plane in Embodiments 1 to 4 and Embodiments 6 to 8) and forms an angle $\theta_Y$ with the XZ plane. When $Z_1 \neq 0$, $\theta_Z \neq \theta_Y$ is satisfied. When an incidence angle (XY plane incidence angle) for the XY plane of the light guide unit 120, 320, or 520 is $\theta_{Z0}$, the light (central incident light beams CL) output from the image generating device 111 or 211 and incident at a point (0, 0, 0) of the light guide unit 120, 320, or 520 has $\theta_{Z0}$=0 degrees (see FIG. 4C). In addition, $\theta_Y$=0 is set.

In Embodiment 1, a value of $\theta_Y$ is constant regardless of a value of $Y_1$, and an absolute value of $\theta_Z$ is increased when an absolute value of $Z_1$ is increased. The absolute value of $\theta_Z$ may be increased monotonically or stepwise when the absolute value of $Z_1$ is increased. It is only necessary to optimize the value of $\theta_Z$ or a shift amount to be described later by performing various tests or simulations based on specifications and designations of the image display device, the image generating device, and the light guide unit.

Specifically, in Embodiment 1, a microlens array 60 in which a plurality of microlenses 61 are arranged in a 2D matrix is disposed in the image generating device 111. Light output from each light emitting unit (light output unit) is output from the image generating device 111 through a microlens 61 facing the light emitting unit. Alternatively, the image generating device 111 is provided with a light output angle control member, and light is output from the image generating device 111 to the light guide unit 120, 320, or 520 through the light output angle control member. The image generating device 111 has light emitting units arranged in a 2D matrix, the light output angle control member is specifically formed by the microlens array 60 in which the plurality of microlenses 61 are arranged in a 2D matrix, and light output from each light emitting unit is output from the image generating device 111 through the microlens 61 facing the light emitting unit.

The microlens 61, for example, is formed by a cylindrical lens or an anamorphic lens. Here, the axial line (cylindrical axis) of the microlens 61 extends in parallel to a direction of the image generating device 111 or 211 corresponding to the Y direction of the light guide unit 120 or 320, a cross-sectional shape when the microlens 61 is cut in the virtual plane of the image generating device corresponding to the XZ plane of the light guide unit partially has a curve such as a semicircle, arc, or ellipse, and a cross-sectional shape when the microlens 61 is cut in the virtual plane of the image generating device corresponding to the YZ plane of the light guide unit is mainly a rectangle.

Here, light output from the polarization beam splitter 152 corresponds to light output from each light emitting unit (light output unit), a light output point of the polarization beam splitter 152 corresponds to a virtual pixel 153, and each virtual pixel 153 corresponds to a light emitting unit. Hereinafter, the light emitting unit is denoted by reference numeral 153. A propagation state of light when viewed from the XZ plane among light beams output from a light emitting unit $153_E$ positioned in an upper portion of the image generating device 111 (specifically, an upper portion of the polarization beam splitter 152) of Embodiment 1 and passing through an opposite microlens $61_E$ is schematically illustrated in FIG. 2A. A propagation state of light when viewed from the XY plane is schematically illustrated in FIG. 2B. Further, a propagation state of light when viewed from the XZ plane among light beams output from a light emitting unit $153_C$ positioned in a center portion of the image generating device 111 (specifically, a center portion of the polarization beam splitter 152) of Embodiment 1 and passing through an opposite microlens $61_C$ is schematically illustrated in FIG. 3A. A propagation state of light when viewed from the XY plane is schematically illustrated in FIG. 3B. In FIGS. 2A and 2B and FIGS. 3A and 3B, the light emitting units $153_C$ and $153_E$ are surrounded by the solid lines.

Here, shift amounts of an optical axis (a normal line passing through the center of the light emitting unit 153) $AX_1$ of the light emitting unit 153 and an optical axis (a normal line passing through the center of the microlens 61) $AX_2$ of the microlens 61 facing the light emitting unit 153 are defined based on a value of (0, $Y_1$, $Z_1$). In the example illustrated in FIG. 3A, because of light output from the light emitting unit $153_C$ positioned in the center portion of the image generating device 111 of Embodiment 1, the value is (0, $Y_1$, 0) and the shift amounts of the optical axis $AX_1$ of the light emitting unit 153 and the optical axis $AX_2$ of the microlens 61 facing the light emitting unit 153 are "0." On the other hand, in the example illustrated in FIG. 2A, because of light output from the light emitting unit $153_E$ positioned in the upper portion of the image generating device 111 of Embodiment 1, the shift amounts of the optical axis $AX_1$ of the light emitting unit 153 and the optical axis $AX_2$ of the microlens 61 facing the light emitting unit 153 are maximum. Light output from each light emitting unit 153 of the image generating device 111 is schematically illustrated in FIG. 4B. In FIG. 4B, a circle represents the light emitting unit 153, and an arrow or black dot drawn in the light emitting unit 153 schematically indicates a direction in which light output from the light emitting unit 153 and passing through the light output angle control member (microlens array) 60 is directed.

In addition, a radiation angle (divergence angle) $\omega_1$ of light output from the microlens 61 can be configured to be less than a radiation angle (divergence angle) $\omega_0$ of light output from the light emitting unit 153 (see FIGS. 2A and 3A). Thereby, the utilization efficiency of light output from the image generating device 111 can be further improved. The radiation angle (divergence angle) is a radiation angle (divergence angle) when light flux is projected on the XZ plane.

A propagation state of light, which is output from the image generating device 111 of Embodiment 1 and guided through the light guide unit 120, and reaches the pupil 21, within a plane corresponding to an inside of the XZ plane and the XY plane is schematically illustrated in FIG. 4A. Incidentally, as described above, because an absolute value of $\theta_Z$ is increased when an absolute value of $Z_1$ is increased in Embodiment 1, all light fluxes (indicated by fine dotted lines $R_3$ in FIG. 4A) output from the image generating device 111 and guided through the light guide unit 120 via the light output angle control member (microlens array) 60 and the parallel light outputting optical system (collimating optical system 112) can be caused to reach the pupil 21. Therefore, the utilization efficiency of light output from the image generating device 111 can be improved and power consumption in the image generating device 111 can be reduced. When the light output angle control member (microlens array) 60 is not provided in FIG. 4A, light flux output from the light emitting unit 153 and reaching the pupil 21 is indicated by a coarse dotted line $R_3'$. problem that part of the light flux does not reach the pupil 21, a type of vignetting occurs, and the utilization efficiency of light output from the image generating device 111 is low leads to an increase in power consumption in the image generating device 111.

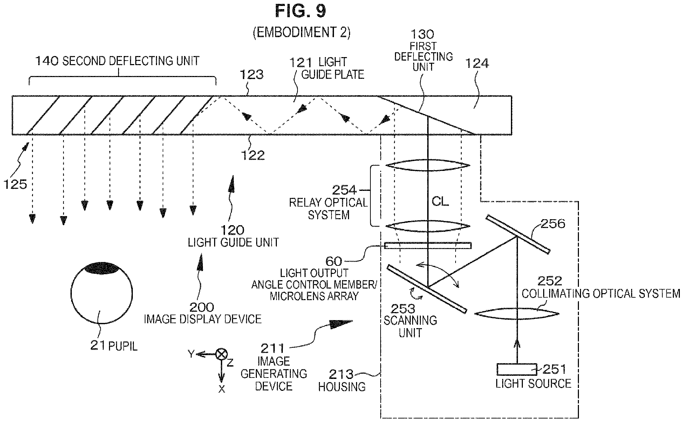

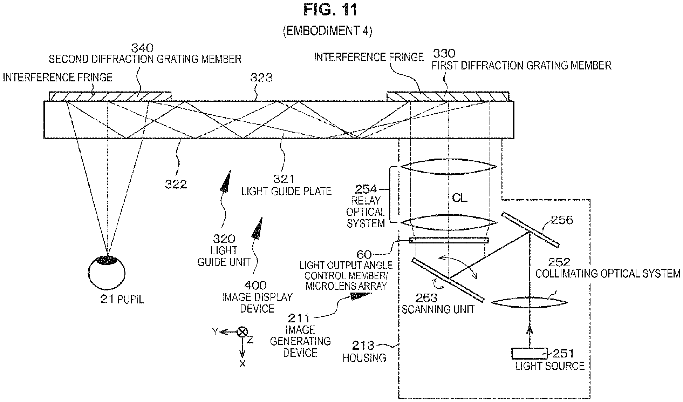

Embodiment 2 is a modification of Embodiment 1. The image display device of Embodiment 2 includes the second form of image generating device/first form of light guide unit. In an image display device 200 or 400 of Embodiment 2 or Embodiment 4 (not part of the invention) to be described later as illustrated in conceptual diagrams of FIGS. 9 and 11, an image generating device 211 includes a light source 251 and a scanning unit 253, which scans parallel light output from the light source 251. More specifically, the image generating device 211 includes:

>    the light source 251,
>    a collimating optical system 252, which collimates light output from the light source 251 into parallel light,
>    the scanning unit 253, which scans the parallel light output from the collimating optical system 252, and
>    a parallel light outputting optical system (relay optical system) 254, which relays and outputs the parallel light scanned by the scanning unit 253. The entire image generating device 211 is fitted inside a housing 213 (indicated by a dashed-dotted line in FIGS. 9 and 11), an opening portion (not illustrated) is arranged in the housing 213, and light is output from the relay optical system 254 via the opening portion. Each housing 213 is mounted on a temple portion 13 in an attachable/detachable state or a fixed state using a mounting member 19.

The light source 251 includes a light emitting device that emits white light. The light output from the light source 251 is incident on the collimating optical system 252 having positive optical power as a whole and output as parallel light. Alternatively, the light source includes a red light emitting element, which emits red light, a green light emitting element, which emits green light, and a blue light emitting element, which emits blue light, and each light emitting element is formed by a semiconductor laser element. Because light of three primary colors output from the light source passes through a cross prism, color synthesis is performed, an optical path is integrated, and the light is incident on the collimating optical system 252 having positive optical power as a whole and output as parallel light. The parallel light is reflected by a total-reflection mirror 256, a micromirror is configured to be rotatable in a 2D direction, horizontal scanning and vertical scanning are performed by the scanning unit 253 formed by the MEMS capable of two-dimensionally scanning the incident parallel light, one type of 2D image is formed, and a light emitting unit (light output unit) including virtual pixels (the number of the pixels, for example, can be the same as in Embodiment 1) is generated. Then, light output from the light emitting unit (virtual pixels) passes through the parallel light outputting optical system including a well-known relay optical system 254, and the light flux formed as the parallel light is incident on the light guide unit 120.

The light output angle control member (microlens array) 60 described in Embodiment 1 is disposed between the scanning unit 253 and the parallel light outputting optical system (relay optical system) 254.

Because the light guide unit 120 on which the light flux formed as the parallel light by the relay optical system 254 is incident, through which the incident light flux is guided, and from which the guided light flux is output has the same configuration and structure as described in Embodiment 1, detailed description thereof is omitted. In addition, because the image display device and the HMD of Embodiment 2 have the same configurations and structures as the image display device and the HMD of Embodiment 1 except for the differences described above, detailed description thereof is omitted.

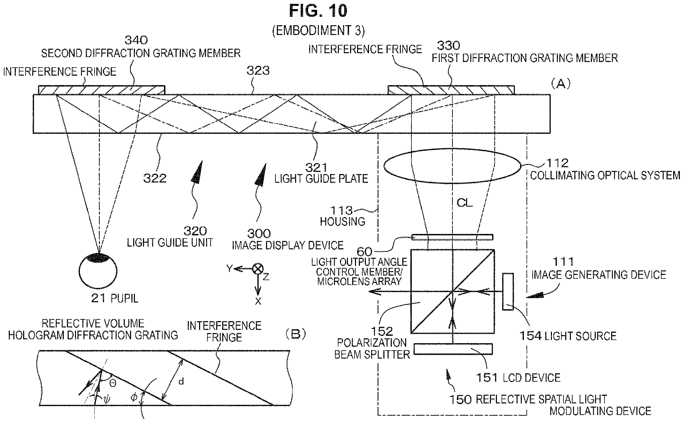

Embodiment 3 is also a modification of the image display device of Embodiment 1. The image display device of Embodiment 3 includes the first form of image generating device/second form of light guide unit. The conceptual diagram of an image display device 300 of Embodiment 3 is illustrated in FIG. 10A. In addition, a schematic cross-sectional view in which part of a reflective-type volume hologram diffraction grating is enlarged is illustrated in FIG. 10B. In Embodiment 3, as in Embodiment 1, an image generating device 111 includes the first form of image generating device. The basic configuration and structure of a light guide unit 320 are the same as those of the light guide unit 120 of Embodiment 1, except for differences in the configurations and the structures of first and second deflecting units.

In Embodiment 3, the first deflecting unit and the second deflecting unit are disposed on a surface of a light guide plate 321 (specifically, a second surface 323 of the light guide plate 321). The first deflecting unit diffracts light incident on the light guide plate 321, and the second deflecting unit diffracts light propagating through the inside of the light guide plate 321 according to total reflection a plurality of times. Here, the first deflecting unit and the second deflecting unit are formed by diffraction grating elements, specifically, reflective diffraction grating elements, and more specifically, reflective volume hologram diffraction gratings. In the following description, the first deflecting unit formed by the reflective volume hologram diffraction grating is referred to as a "first diffraction grating member 330" for convenience, and the second deflecting unit formed by the reflective volume hologram diffraction grating is referred to as a "second diffraction grating member 340" for convenience.

In Embodiment 3 or Embodiment 4 (not part of the invention) to be described later, the first diffraction grating member 330 and the second diffraction grating member 340 include one diffraction grating layer. In each diffraction grating layer formed by a photopolymer material, interference fringes corresponding to one type of wavelength band (or wavelength) are formed, and manufactured using a method of the related art. The pitch of the interference fringes formed in the diffraction grating layer (diffractive optical element) is constant, and the interference fringes have a linear shape and extend in parallel to the Z axis. The axial lines of the first diffraction grating member 330 and the second diffraction grating member 340 are parallel to the Y axis, and the normal lines thereof are parallel to the X axis.

To cope with the diffraction and the reflection of P types (for example, P=3, and three types of red, green and blue) of light having P different types of wavelength bands (or wavelengths), the first diffraction grating member 330 and the second diffraction grating member 340 can be formed by laminating the P diffraction grating layers formed by the reflective volume hologram diffraction gratings. Interference fringes corresponding to one type of wavelength band (or the wavelength) are formed on each diffraction grating layer formed by the photopolymer material, and manufactured using a method of the related art. More specifically, the first diffraction grating member 330 and the second diffraction grating member 340 have a structure in which a diffraction grating layer that diffracts and reflects red light, a diffraction grating layer that diffracts and reflects green light, and a diffraction grating layer that diffracts and reflects blue light are laminated. The pitch of the interference fringes formed in the diffraction grating layer (diffraction grating element) is constant, and the interference fringes have a linear shape and extend in parallel to the Z direction. In FIGS. 10A and 11, the first diffraction grating member 330 and the second diffraction grating member 340 are illustrated in one layer. By adopting such a configuration, an increase in the diffraction efficiency, an increase in the diffraction acceptance angle, and the optimization of the diffraction angle when light having each wavelength band (or the wavelength) is diffracted and reflected in the first diffraction grating member 330 and the second diffraction grating member 340 can be achieved.

A schematic partial cross-sectional view in which the reflective volume hologram diffraction grating is enlarged is illustrated in FIG. 10B. In the reflective volume hologram diffraction grating, interference fringes having a slant angle φ are formed. Here, the slant angle φ represents an angle formed by the surface of the reflective volume hologram diffraction grating and the interference fringes. The interference fringes are formed from the inside of the reflective volume hologram diffraction grating to the surface thereof. The interference fringes satisfy a Bragg condition. Here, the Bragg condition is a condition that satisfies the following Expression (A). In Expression (A), m represents a positive integer, λ represents a wavelength, d represents the pitch of the grating surface (a gap of virtual planes including the interference fringes in the direction of the normal line), and Θ represents a complementary angle of an angle at which light is incident on the interference fringes. In addition, when light penetrates into the diffraction grating member at an incidence angle ψ, the relationship among the complementary angle Θ, the slant angle φ, and the incidence angle ψ is shown in Expression (B).

$$m \cdot \lambda = 2 \cdot d \cdot \sin(\Theta) \ldots (A)$$

$$\Theta = 90° - (\phi + \psi) \ldots (B)$$

As described above, the first diffraction grating member 330 is arranged on (adhered to) the second surface 323 of the light guide plate 321 and diffracts and reflects parallel light incident on the light guide plate 321 so that the parallel light incident from the first surface 322 to the light guide plate 321 is totally reflected inside the light guide plate 321. Further, as described above, the second diffraction grating member 340 is arranged on (adhered to) the second surface 323 of the light guide plate 321 and diffracts and reflects the parallel light propagating through the inside of the light guide plate 321 according to total reflection a plurality of times, and the parallel light is directly output from the first surface 322 of the light guide plate 321. However, the present disclosure is not limited thereto. The light-guide-plate incidence surface may be configured by the second surface 323, and the light-guide-plate output surface may be configured by the first surface 322.

Then, the parallel light propagates through the inside of the light guide plate 321 according to total reflection and then is output therefrom. Alternatively, parallel light of three colors of red, green, and blue propagates through the inside according to total reflection and then is output therefrom. At this time, because the light guide plate 321 is thin, and a path of light that propagates through the inside of the light guide plate 321 is long, the number of total reflections until the parallel light reaches the second diffraction grating member 340 differs according to a view angle (horizontal view angle). In further detail, the number of reflections of parallel light incident at an angle (horizontal view angle) in a direction close to the second diffraction grating member 340 among parallel light beams incident on the light guide plate 321 is less than that of parallel light incident on the light guide plate 321 at an angle in a direction away from the second diffraction grating member 340. This is because parallel light incident on the light guide plate 321 at an angle close to the second diffraction grating member 340 among parallel light beams diffracted and reflected in the first diffraction grating member 330 has a larger angle formed with the normal line of the light guide plate 321 when light propagating through the inside of the light guide plate 321 collides with the inner surface of the light guide plate 321 than parallel light incident on the light guide plate 321 at an angle in a direction reverse thereto. In addition, the shape of the interference fringes formed inside the second diffraction grating member 340 and the shape of the interference fringes formed inside the first diffraction grating member 330 are symmetrical with respect to the XZ plane of the light guide plate 321.

A light guide plate 321 in accordance with Embodiment 4 (not part of the invention) to be described later also basically has the same configuration and structure as the light guide plate 321 described above. The image display device and the HMD of Embodiment 3 has the same configuration and structure as the image display devices and the HMDs of Embodiments 1 and 2 except for the differences described above, and thus detailed description thereof is omitted.

Embodiment 4, which is not part of the invention, is a modification of the image display device in accordance with Embodiment 3. Specifically, the image display device of Embodiment 4 includes the second form of image generating apparatus/second form of light guide unit. A conceptual diagram of the image display device of Embodiment 4 (not part of the invention) is illustrated in FIG. 11. A light source 251, a collimating optical system 252, a scanning unit 253, a parallel light outputting optical system (relay optical system 254), and the like in the image display device 400 of Embodiment 4 have the same configurations and structures (the second form of image generating device) as those of Embodiment 2. In addition, a light guide unit 320 in accordance with Embodiment 4 has the same configuration and structure as those of the light guide unit 320 in accordance with Embodiment 3. Because the image display device and the HMD of Embodiment 4 substantially have the same configuration and structure as the image display devices and the HMDs of Embodiments 1 and 2 except for the differences described above, detailed description thereof is omitted.

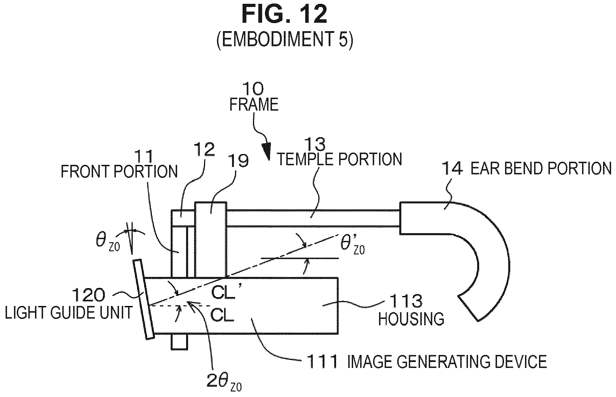

Embodiment 5 is a modification of the image display devices in accordance with Embodiments 1 to 4. In addition, a schematic diagram of the image display device of Embodiment 5 viewed from the side is illustrated in FIG. 12.

In Embodiments 1 to 4, in the image display device 100 or 300, the central incident light beam CL output from the center of the image generating device 111 or 211 and passing through the nodal point of the parallel light outputting optical system 112 or 254 is designed to be incident at an incidence angle (XY plane incidence angle) $\theta_{Z0}$ of 0 degrees for the XY plane of the light guide plate 121 or 321. That is, $\theta_{Z0}$=0 degrees.

That is, in such an image display device represented by the image display device 100, as illustrated in FIG. 29B, the central incident light beam CL output from the center of the image generating device 111 on the optical axis of the collimating optical system 112 is converted into approximately parallel light by the collimating optical system 112 and then incident on the first surface (incidence surface) 122 of the light guide plate 121. The parallel light propagates in a propagation direction A while being totally reflected between the first surface 122 and the second surface 123 by the first diffraction unit 130. Subsequently, the central incident light beam CL is reflected and diffracted by the second deflecting unit 140 and output from the first surface 122 of the light guide plate 121 within the XY plane, and reaches the pupil 21 of the observer 20.

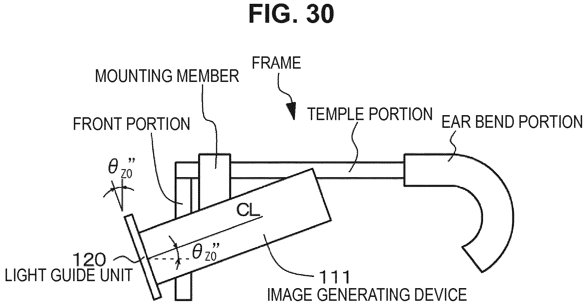

In a see-through type image display device, it is preferable to shift the light guide unit 120, 320, or 520 to be arranged below the line of sight of the observer in the horizontal direction (the horizontal-direction line of sight of the observer) so that the light guide unit 120, 320, or 520 does not interfere with viewing when the observer 20 views an observation target located in the horizontal direction. In such a case, the entire image display device 100 or 300 is arranged below the horizontal-direction line of sight of the observer. In such a configuration, as illustrated in FIG. 30, which illustrates a form of image display device of the related art, it is necessary to incline the entire image display device 100 by an angle $\theta_{Z0}$", and the angle $\theta_{Z0}$" by which the image display device 100 can be inclined may be limited, or the degree of freedom in design may decrease from the relationship with the mounting portion (temple portion) of the eyeglass type frame to be mounted on the head of the observer. Therefore, it is more preferable to form the arrangement of a high degree of freedom and an image display device having a high degree of freedom in design without interfering with the horizontal-direction line of sight of the observer.

In Embodiment 5, the central incident light beam CL is formed to intersect the XY plane at an angle ($\theta_{Z0} \neq 0$) other than zero degrees (see FIG. 4D and FIG. 12). The central incident light beam CL is included within the XZ plane. In addition, in Embodiment 5, the angle $\theta_{Z0}$ at which the central incident light beam CL intersects the XY plane is an elevation angle. That is, the central incident light beam CL is directed from the lower side of the XY plane to the XY plane, and collides with the XY plane. The XY plane intersects the vertical surface at an angle other than zero degrees, specifically, at an angle $\theta_{Z0}$.

In Embodiment 5, the angle $\theta_{Z0}$=5 degrees. That is, the light guide unit 120, 320, or 520 is inclined by the angle $\theta_{Z0}$ with respect to the vertical surface. In other words, the light guide unit 120, 320, or 520 is inclined by an angle of (90-$\theta_{Z0}$) degrees with respect to the horizontal surface. In addition, the central incident light beam CL output from the light guide unit 120, 320, or 520 is inclined by an angle $2\theta_{Z0}$ with respect to the horizontal surface. That is, when the observer 20 views a target located at an infinite distance in the horizontal direction, the central incident light beam CL output from the light guide unit 120, 320, or 520 and incident on the pupil 21 of the observer 20 forms a depression angle $\theta_{Z0}'$ (=$2\theta_{Z0}$). The angle formed by the central incident light beam CL and the normal line of the light guide unit 120, 320, or 520 is $\theta_{Z0}$.

In the image display device of Embodiment 5, the central incident light beam CL intersects the XY plane at an angle ($\theta_{Z0}$) other than zero degrees. Here, the central incident light beam CL output from the light guide unit 120 or 320 and incident on the pupil 21 of the observer 20 forms a depression angle $\theta_{Z0}'$, but there is a relationship of $\theta_{Z0}'$=$2\theta_{Z0}$. On the other hand, in the example illustrated in FIG. 30, in order to obtain the same depression angle, it is necessary to incline the entire image display device by an angle $\theta_{Z0}''$. Here, the relationship between $\theta_{Z0}''$ and $\theta_{Z0}$ is $\theta_{Z0}''$=$2\theta_{Z0}$, and hence the light guide unit should be inclined by $2\theta_{Z0}$ with respect to the vertical surface in the example illustrated in FIG. 30. On the other hand, in Embodiment 5, it is only necessary to incline the light guide unit by $\theta_{Z0}$ with respect to the vertical surface, and to horizontally hold the image generating device. Accordingly, a mounting angle of the image display device at the time of mounting the image display device on a mounting portion of the eyeglass type frame is less limited and a high degree of freedom in the design can be obtained. In addition, because the inclination of the light guide unit with respect to the vertical surface is less than that of the example illustrated in FIG. 30, a phenomenon that external light is reflected by the light guide unit and incident on the pupil 21 of the observer 20 does not easily occur. Therefore, an image having higher quality can be displayed.

Because the image display device of Embodiment 5 has the same configuration and structure as the image display devices of Embodiments 1 to 4 except for the differences described above, detailed description thereof is omitted.

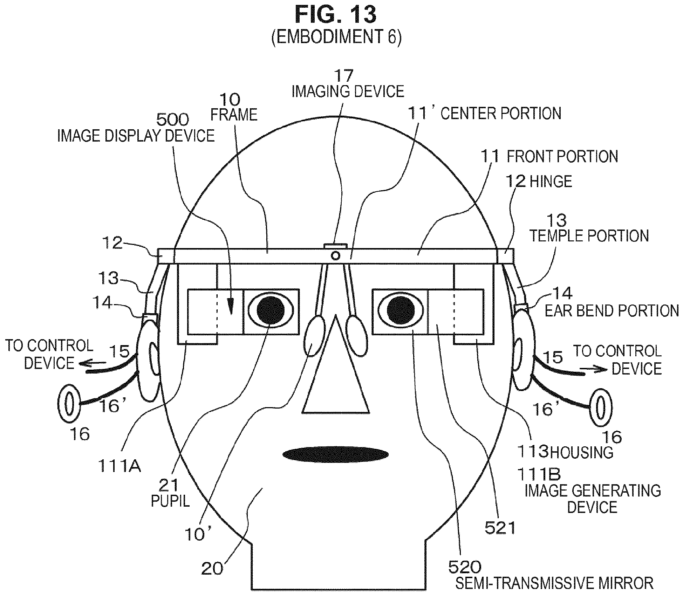

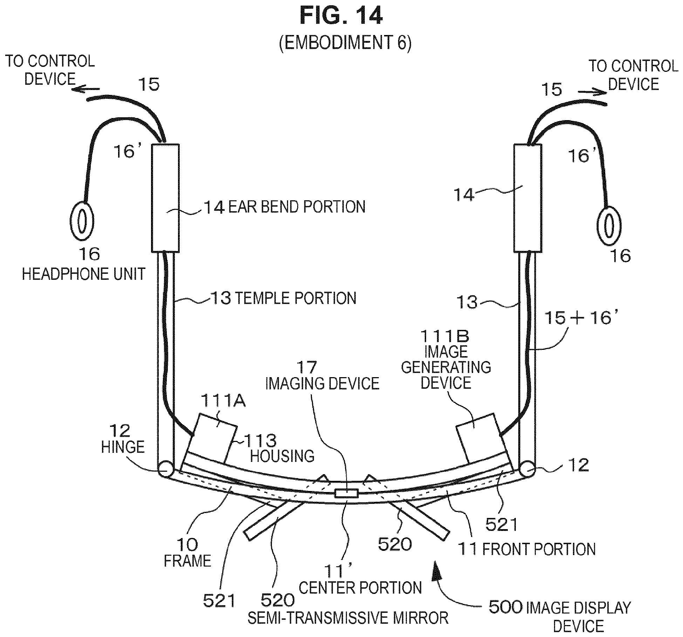

Embodiment 6 is also a modification of the image display devices in Embodiments 1 to 4. A schematic diagram of an image display device of Embodiment 6 viewed from the front is illustrated in FIG. 13, and a schematic diagram thereof viewed from above is illustrated in FIG. 14.

In Embodiment 6, a light guide unit 520 includes a semi-transmissive mirror on which light output from the image generating devices 111A and 111B is incident and from which the light is output toward the pupil 21 of the observer 20. In addition, although a structure in which the light output from the image generating devices 111A and 111B propagates through the inside of a transparent member 521 such as a glass plate or a plastic plate and is incident on the light guide unit 520 (semi-transmissive mirror) is provided in Embodiment 6, a structure in which the light propagates through the air and is incident on the light guide unit 520 may be provided. In addition, the image generating device may be configured as the image generating device 211 described in Embodiment 2.

Each of the image generating devices 111A and 111B is mounted on a front portion 11, for example, using a screw. In addition, the member 521 is mounted on each of the image generating devices 111A and 111B, and the light guide unit 520 (semi-transmissive mirror) is mounted on the member 521. Because the image display device of Embodiment 6 has substantially the same configuration and structure as the image display devices of Embodiments 1 to 4 except for the differences described above, detailed description thereof is omitted.

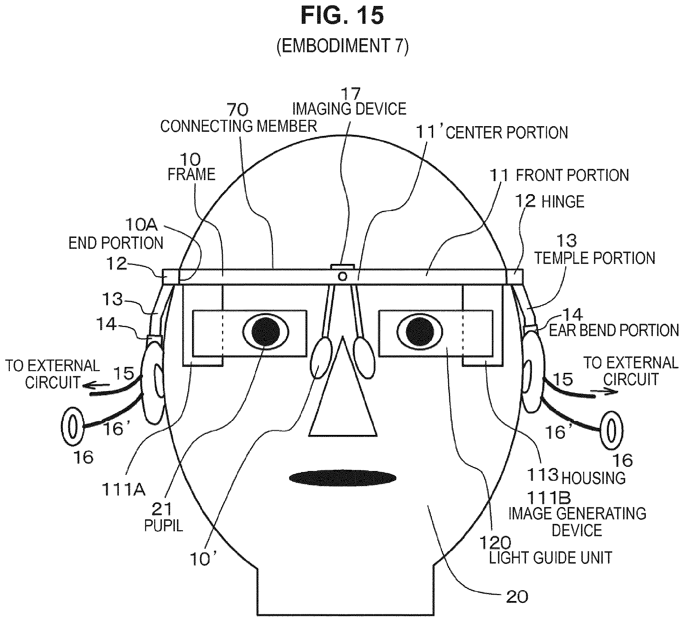

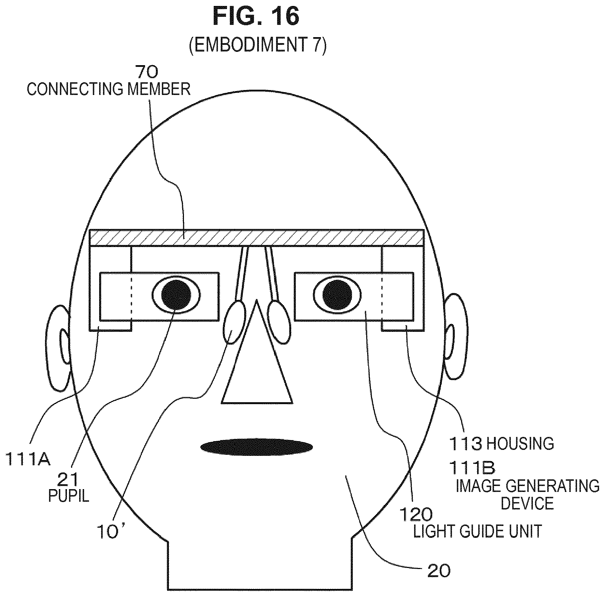

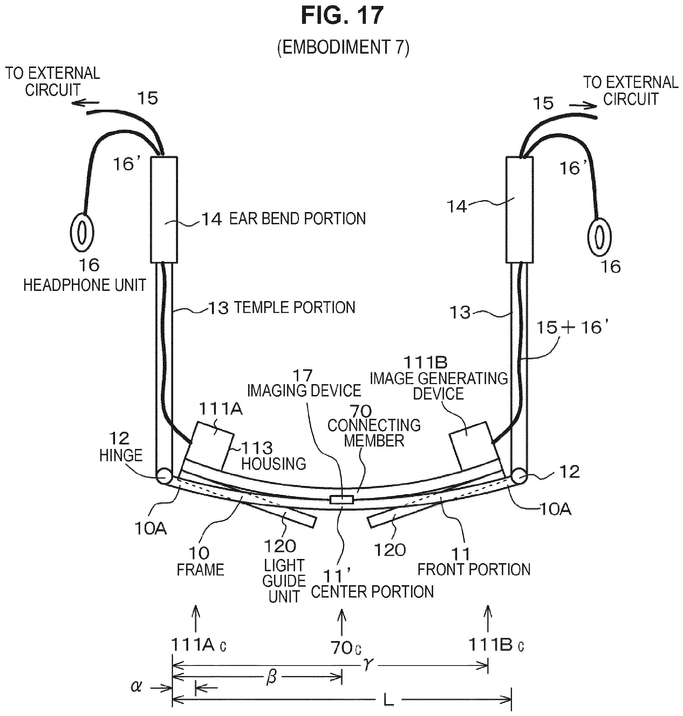

Embodiment 7 relates to an HMD in which the image display device of the present disclosure, specifically, any one of the image display devices 100, 200, 300, 400, and 500 described in Embodiments 1 to 6, is embedded. A schematic diagram of the HMD of Embodiment 7 viewed from the front is illustrated in FIG. 15. A schematic diagram of the HMD of Embodiment 7 (in a state in which a frame is assumed to be removed) viewed from the front is illustrated in FIG. 16. In addition, a schematic diagram of the HMD of Embodiment 7 viewed from above is illustrated in FIG. 17. In addition, although the image display device represented by the image display device 100 will be described, needless to say, the image display devices 200, 300, 400, and 500 can be applied.

The HMD of Embodiment 7 includes:

(A) an eyeglass type frame 10 mounted on a head of an observer 20, and
(B) two image display devices 100. The HMD in accordance with Embodiment 7 or 8 to be described later is also a binocular type in which two image display devices 100 are provided.

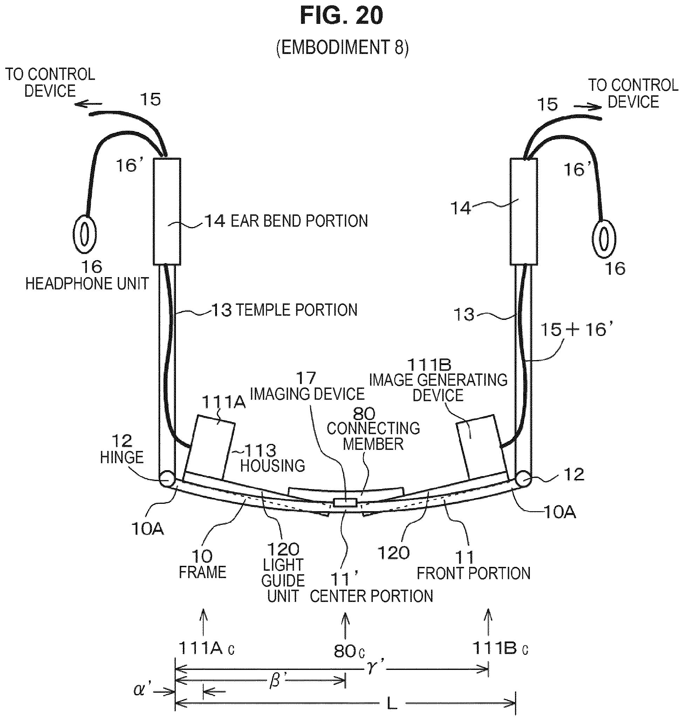

In addition, the HMD of Embodiment 7 further includes a connecting member 70, which connects the two image display devices 100. The connecting member 70 is mounted on a side facing the observer (that is, between the observer 20 and the frame 10) in a center portion 11' of a front portion 11 of the frame 10 (corresponding to a portion of a bridge in an ordinary pair of eyeglasses) located between two pupils 21 of the observer 20 using screws (not illustrated). In addition, nose pads 10' are mounted on a side facing the observer 20 in the connecting member 70. In FIGS. 17 and 20, the illustration of the nose pads 10' is omitted. The frame 10 and the connecting member 70 are formed of a metal or plastic, and the shape of the connecting member 70 is a curved rod shape.

Further, the projected image of the connecting member 70 is included within the projected image of the frame 10. That is, when the HMD is viewed from the front side of the observer 20, the connecting member 70 is hidden behind the frame 10, so that the connecting member 70 is not visible. In addition, although the two image display devices 100 are connected by the connecting member 70, the image generating devices 111A and 111B can be specifically accommodated in the housing 113 and mounted on both end portions of the connecting member 70, respectively, so that the mounting state is adjustable. Each of the image generating devices 111A and 111B is located outside the pupil 21 of the observer 20. Specifically, $\alpha=0.1\times L$, $\beta=0.5\times L$, and $\gamma=0.9\times L$, where $\alpha$ is the distance between a mounting-portion center $111A_C$ of the image generating device 111A on one side and one end portion (one end piece) 10A of the frame 10, $\beta$ is the distance from a center $70_C$ of the connecting member 70 to the one end portion (one end piece) 10A of the frame, $\gamma$ is the distance between a mounting-portion center $111B_C$ of the image generating device 111B on the other side and the one end portion (one end piece) 10A of the frame, and L is the length of the frame.

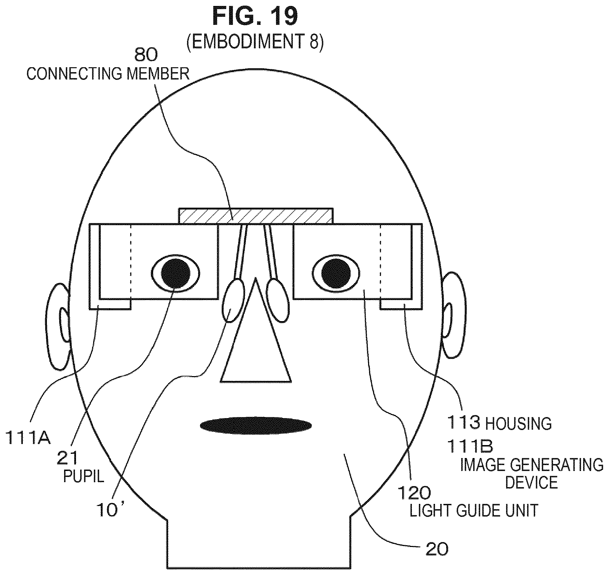

For the mounting of the image generating devices (specifically, the image generating devices 111A and 111B) on the end portions of the connecting member 70, specifically, the connecting member 70 is provided with through-holes (not illustrated) at three positions in each end portion thereof, and the image generating devices 111A and 111B are provided with tapped holes (screw-engagement portions (not illustrated)) corresponding to the through-holes. Screws (not illustrated) pass through the through-holes, and are screw engaged with the holes formed in the image generating devices 111A and 111B. A spring is inserted between the screw and the hole. Thus, the mounting state of each image generating device (the inclination of each image generating device relative to the connecting member) can be adjusted according to the fastening states of the screws. After the mounting, the screws are hidden by a cover (not illustrated). In FIGS. 16 and 19, connecting members 70 and 80 are hatched with diagonal lines so that the connecting members 70 and 80 are clearly shown.

As described above, in the HMD of Embodiment 7, the connecting member 70 connects the two image display devices 100. The connecting member 70 is mounted on the center portion 11' of the frame 10 located between the two pupils 21 of the observer 20. That is, a structure in which the image display devices 100 are directly mounted on the frame 10 is not adopted here. Accordingly, a displacement (positional change) of the image generating device 111A or 111B is not caused by deformation of the frame 10 even when the temple portions 13 are expanded to the outside when the frame 10 is mounted on the head of the observer 20 and hence the frame 10 is deformed, or such displacement, if any, is very small. Therefore, it is possible to reliably prevent angles of convergence of left and right images from being changed. Moreover, because it is unnecessary to enhance the rigidity of the front portion 11 of the frame 10, it is possible to avoid causing an increase in the weight of the frame 10, a decrease in design quality, or an increase in cost. In addition, because the image display devices 100 are not directly mounted on the eyeglass type frame 10, the design, color and the like of the frame 10 can be freely selected according to the observer's preference. Thus, there are few restrictions imposed on the design of the frame 10, so that the degree of freedom in design is high. In addition, the connecting member 70 is hidden behind the frame 10 when the HMD is viewed from the front side of the observer. Accordingly, high design quality can be given to the HMD.

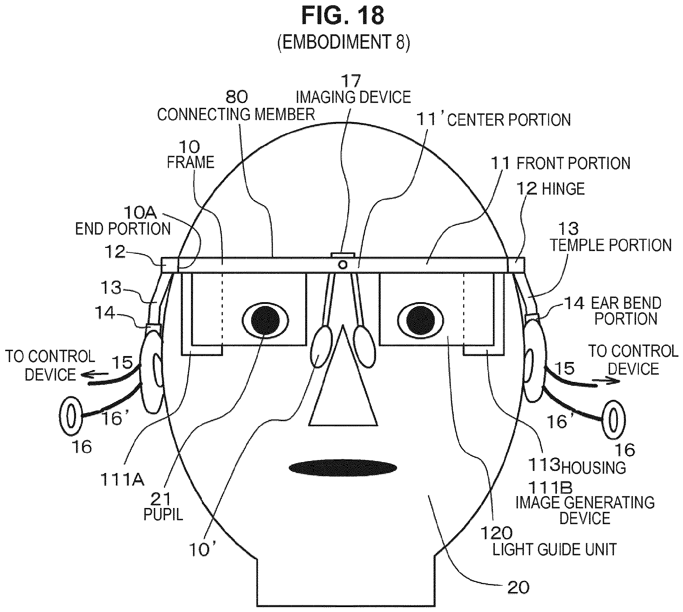

Embodiment 8 is a modification of Embodiment 7. A schematic diagram of an HMD of Embodiment 8 viewed from the front is illustrated in FIG. 18. A schematic diagram of the HMD of Embodiment 8 (in a state in which a frame is assumed to be removed) viewed from the front is illustrated in FIG. 19. In addition, a schematic diagram of the HMD of Embodiment 8 viewed from above is illustrated in FIG. 20.

In the HMD of Embodiment 8, a rod-shaped connecting member 80 is different from Embodiment 7, and connects two light guide units 120 instead of connecting the two image generating devices 111A and 111B. The two light guide units 120 are manufactured in an integrated manner, and the connecting member 80 can be formed to be mounted on the light guide unit 120 manufactured in the integrated manner.

Here, even in the HMD of Embodiment 8, the connecting member 80 is mounted on the center portion 11' of the frame 10 located between the two pupils 21 of the observer 20, for example, using screws, and each image generating device 111 is located outside the pupil 21 of the observer 20. Each image generating device 111 is mounted on the end portion of the light guide unit 120. When a distance from a center $80_C$ of the connecting member 80 to one end portion of the frame 10 is set as $\beta$ and a length of the frame 10 is set as L, $\beta=0.5\times L$ is satisfied. Even in Embodiment 8, values of $\alpha'$ and $\gamma'$ are the same as values of $\alpha$ and $\gamma$ of Embodiment 7.

The frame 10 and each image display device of Embodiment 8 have the same configurations and structures as the frame 10 and the image display device of Embodiment 7, and therefore detailed description thereof is omitted. In addition, because the HMD of Embodiment 8 also has substantially the same configuration and structure as the HMD of Embodiment 7 except for the differences described above, detailed description thereof is omitted.

Although the present disclosure has been described based on the preferred embodiments, the present disclosure is not limited to these embodiments. The configurations and structures of the image display device and the image generating device described in the embodiments are merely exemplary, and can be changed appropriately. Although a Y direction is set as a direction generally horizontal to the observer in Embodiment 1, the Y direction may be set as a direction generally perpendicular to the observer depending upon arrangement states of the image display device, the image generating device, and the light guide unit. In addition, an angle $\theta_Y$ may be an angle other than zero degrees. In this case, light incident at a point $(0, Y_1, Z_1)$ of the light guide unit penetrates the light guide unit in a direction reverse to a light guide direction of light in the light guide unit. That is, the light incident at a point $(0, Y_1, Z_1)$ of the light guide unit forms an acute angle as a whole with the light guide direction of light in the light guide unit. Further, in other words, it is preferable that an angle formed by a projected image for the XY plane of the light incident at the point $(0, Y_1, Z_1)$ of the light guide unit and the Y axis be an acute angle.

In addition, for example, a surface relief-type hologram (see U.S. Patent No. 20040062505 A1) may be arranged on the light guiding plate. In addition, in the light guide unit of Embodiment 3 or 4, the first deflecting unit formed by a transmissive hologram can be configured to be disposed on the first surface 332 of the light guide plate 321, and the second deflecting unit formed by a reflective hologram can be configured to be disposed on the second surface 323. In such a configuration, light incident on the first deflecting unit is diffracted, satisfies a total reflection condition within the light guide plate, and propagates to the second deflecting unit. In the second deflecting unit, light is diffracted, reflected, and output from the light guide plate. In the light guide unit of Embodiment 3 or 4, the diffraction grating element can be formed by a transmissive diffraction grating element. Alternatively, any one of the first and second deflecting unit can be formed by a reflective diffraction grating element and the other can be formed by the transmissive diffraction grating element. Alternatively, the diffraction grating element can be a reflective blazed grating element or a surface relief hologram. Although a binocular type in which two image display devices are provided has been described in the embodiment, a monocular type in which one image display device is provided may be provided.

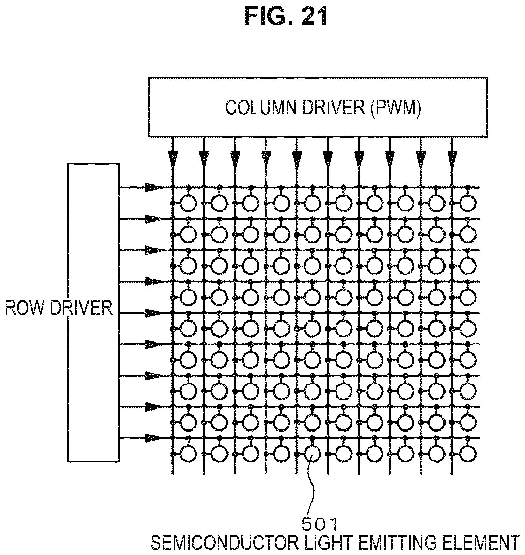

As a modification of an image generating device suitably for use in Embodiments 1 and 3, for example, as illustrated in a conceptual view of FIG. 21, an active matrix type of image generating device can include a light emitting panel in which light emitting elements 501 formed by semiconductor light emitting elements are arranged in a 2D matrix, and display an image by controlling a light emitting/non-light-emitting state of each light emitting element 501 so that the light emitting state of the light emitting element 501 is directly visible. Light output from the image generating device is incident on a light guide plate 121 or 321 via a light output angle control member (microlens array) 60 and a collimating optical system 112.

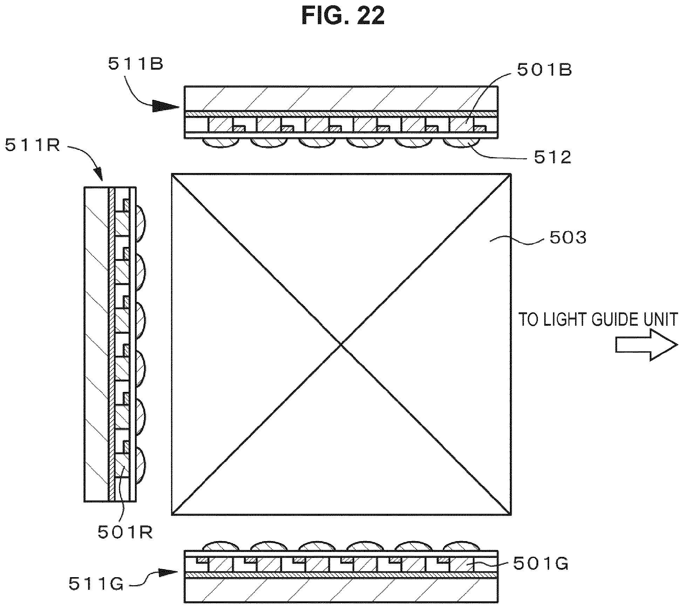

Alternatively, as illustrated in a conceptual diagram of FIG. 22, a color-display image generating device can include:

($\alpha$) a red light emitting panel 511R in which red light emitting elements 501R for emitting red light are arranged in a 2D matrix;
($\beta$) a green light emitting panel 511G in which green light emitting elements 501G for emitting green light are arranged in a 2D matrix;
($\gamma$) a blue light emitting panel 511B in which blue light emitting elements 501B for emitting blue light are arranged in a 2D matrix; and
($\delta$) a unit (e.g., a dichroic prism 503) for integrating light output from the red, green, and blue light emitting panels 511R, 511G, and 511B into one optical path. Light emitting/non-light-emitting states of the red, green, and blue light emitting elements 501R, 501G, and 501B are controlled independently. Light output from this image generating device is also incident on the light guide plate 121 or 321 via the light output angle control member (microlens array) 60 and the collimating optical system 112. Reference numeral 512 denotes microlenses for condensing light output from the light emitting elements.

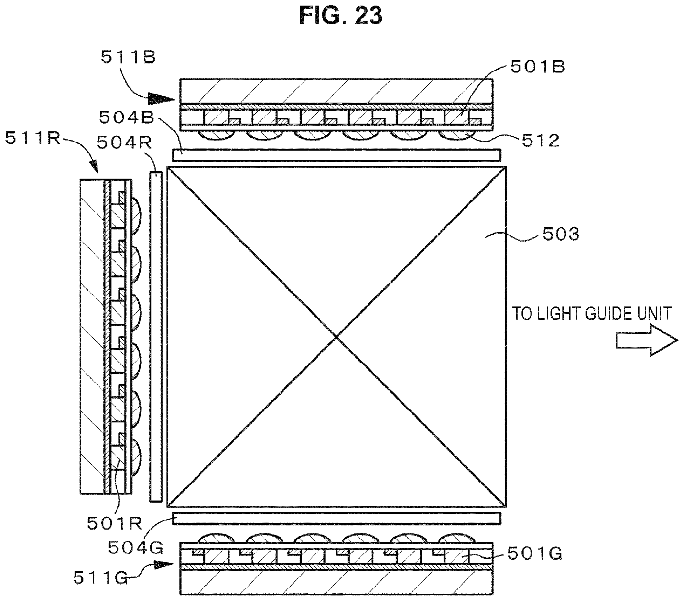

Alternatively, a conceptual view of an image generating device including light emitting panels 511R, 511G, and 511B in which light emitting elements 501R, 501G, and 501B are arranged in a 2D matrix is illustrated in FIG. 23. Light output from the light emitting panels 511R, 511G, and 511B is incident on a dichroic prism 503 after passage/non-passage thereof is controlled by light passage control devices 504R, 504G, and 504B. The optical paths of the light beams are integrated into one optical path, and the light beams are incident on the light guide plate 121 or 321 via the light output angle control member (microlens array) 60 and the collimating optical system 112.

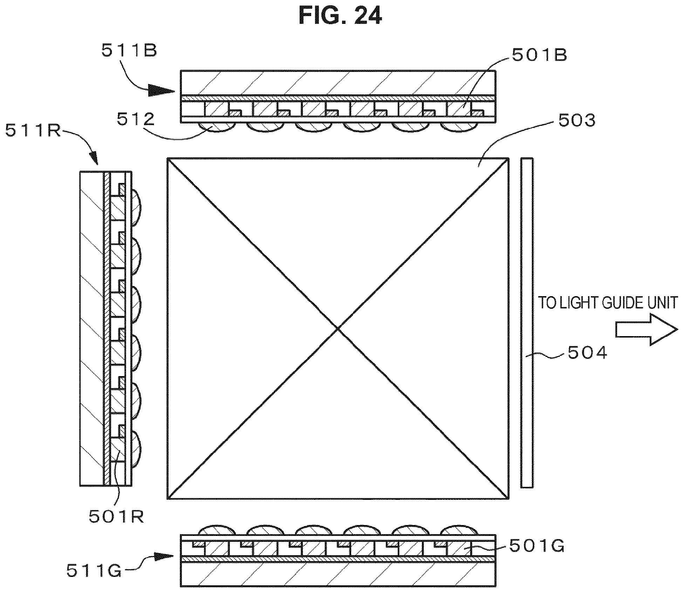

Alternatively, a conceptual view of an image generating device including light emitting panels 511R, 511G, and 511B and the like in which light emitting elements 501R, 501G, and 501B are arranged in a 2D matrix is illustrated in FIG. 24. Light output from the light emitting panels 511R, 511G, and 511B is incident on a dichroic prism 503 and optical paths thereof are integrated into one optical path. Passage/non-passage of the light output from the dichroic prism 503 is controlled by a light passage control device 504, and the light is incident on the light guide plate 121 or 321 via the light output angle control member (microlens array) 60 and the collimating optical system 112.

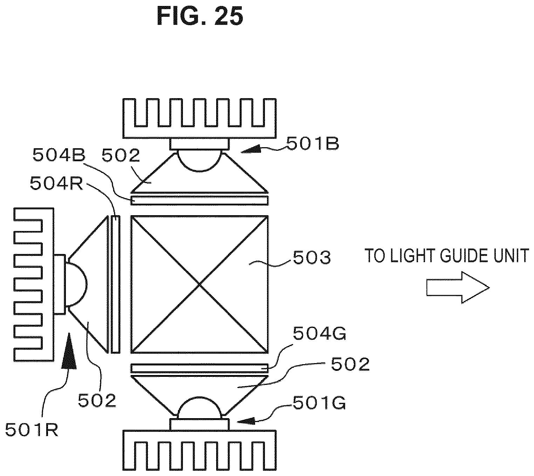

Alternatively, as illustrated in FIG. 25, an image generating device can include a light emitting element 501R for emitting red light, a light passage control device (e.g., an LCD device 504R), which is a type of light valve for controlling passage/non-passage of the red light output from the light emitting element 501R, a light emitting element 501G for emitting green light, a light passage control device (e.g., an LCD device 504G), which is a type of light valve for controlling passage/non-passage of the green light output from the light emitting element 501G, a light emitting element 501B for emitting blue light, a light passage control device (e.g., an LCD device 504B), which is a type of light valve for controlling passage/non-passage of the blue light output from the light emitting element 501B, light guide members 502 for guiding the light output from the light emitting elements 501R, 501G, and 501B formed by GaN semiconductors, and a unit (e.g., a dichroic prism 503) for integrating the optical paths of the light into one optical path. The light output from the dichroic prism 503 is incident on the light guide plate 121 or 321 via the light output angle control member (microlens array) 60 and the collimating optical system 112.

Additionally, the present technology may also be configured as below.

(1) An image display device including:

(A) an image generating device; and
(B) a light guide unit on which light from the image generating device is incident, through which the light is guided, and from which the light is output toward a pupil of an observer,
wherein when a point at which light output from a center of the image generating device is incident on the light guide unit is set as a point O, a normal line passing through the point O in a portion of the light guide unit is set as an X axis, an axis of the light guide unit passing through the point O in a portion of the light guide unit is set as a Y axis, an optical axis of light incident at the point O of the light guide unit among light beams output from a center of the image generating device is set as a $\zeta$ axis, and a virtual plane including the $\zeta$ axis and the Y axis is set as a $\zeta Y$ plane, light output from the image generating device and incident at a point $(0, Y_1, Z_1)$ forms an angle $\theta_Z$ with the $\zeta Y$ plane and forms an angle $\theta_Y$ with an XZ plane, and
wherein when $Z_1 \neq 0$, $\theta_Z \neq \theta_Y$ is satisfied.

(2) The image display device according to (1),
wherein a value of $\theta_Y$ is constant regardless of a value of $Y_1$, and
wherein an absolute value of $\theta_Z$ is increased when an absolute value of $Z_1$ is increased.
(3) The image display device according to (2),
wherein the absolute value of $\theta_Z$ can be increased monotonically or stepwise when the absolute value of $Z_1$ is increased.
(4) The image display device according to (2) or (3),
wherein the image generating device has a light emitting unit arranged in a two-dimensional (2D) matrix,
wherein a microlens array in which a plurality of microlenses are arranged in a 2D matrix is disposed in the image generating device,
wherein light output from each light emitting unit is output from the image generating device through a microlens facing the light emitting unit, and
wherein shift amounts of an optical axis of the light emitting unit and an optical axis of the microlens facing the light emitting unit are defined based on a value of $(0, Y_1, Z_1)$.
(5) The image display device according to (4),
wherein the microlens is formed by a cylindrical lens or an anamorphic lens.
(6) The image display device according to (4) or (5),
wherein a radiation angle of light output from the microlens is less than a radiation angle of light output from the light emitting unit.
(7) The image display device according to any one of (1) to (3),
wherein an image generating device has a light output angle control member, and
wherein light is output from the image generating device to a light guide unit through the light output angle control member.
(8) The image display device according to (7),
wherein the image generating device has light emitting units arranged in a 2D matrix, wherein the light output angle control member is formed by a microlens array in which a plurality of microlenses are arranged in a 2D matrix, and
wherein light output from each light emitting unit is output from the image generating device through a microlens facing the light emitting unit.
(9) The image display device according to (8),
wherein shift amounts of an optical axis of the light emitting unit and an optical axis of the microlens facing the light emitting unit are defined based on a value of $(0, Y_1, Z_1)$.
(10) The image display device according to (8) or (9),
wherein the microlens is formed by a cylindrical lens or an anamorphic lens.
(11) The image display device according to any one of (8) to (10),
wherein a radiation angle of light output from the microlens is less than a radiation angle of light output from the light emitting unit.
(12) The image display device according to any one of (1) to (11),
wherein the light guide unit includes

(B-1) a light guide plate from which the incident light is output after the incident light propagates through an inside according to total reflection,
(B-2) a first deflecting unit configured to deflect the light incident on the light guide plate so that the light incident on the light guide plate is totally reflected inside the light guide plate, and
(B-3) a second deflecting unit configured to deflect the light propagating through the inside of the light guide plate according to the total reflection a plurality of times so that the light propagating through the inside of the light guide plate according to the total reflection is output from the light guide plate.

(13) The image display device according to any one of (1) to (12),
wherein the image generating device is formed by a liquid crystal display device, an organic electro luminescence display device, or a light emitting element array.

(14) An image generating device for outputting light to a light guide unit including a light guide plate from which incident light is output after the incident light propagates through an inside according to total reflection, a first deflecting unit configured to deflect light incident on the light guide plate so that the light incident on the light guide plate is totally reflected inside the light guide plate, and a second deflecting unit configured to deflect light propagating through the inside of the light guide plate according to the total reflection a plurality of times so that the light propagating through the inside of the light guide plate according to the total reflection is output from the light guide plate,
wherein, when a point at which light output from a center of the image generating device is incident on the light guide unit is set as a point O, a normal line passing through the point O in a portion of the light guide unit is set as an X axis, an axis of the light guide unit passing through the point O in a portion of the light guide unit is set as a Y axis, an optical axis of light incident at the point O of the light guide unit among light beams output from a center of the image generating device is set as a $\zeta$ axis, and a virtual plane including the $\zeta$ axis and the Y axis is set as a $\zeta$Y plane, light output from the image generating device and incident at a point $(0, Y_1, Z_1)$ forms an angle $\theta_Z$ with the $\zeta$Y plane and forms an angle $\theta_Y$ with an XZ plane, and
wherein when $Z_1 \neq 0$, $\theta_Z \neq \theta_Y$ is satisfied.

(14). An image display device, comprising:

a plurality of light emitting units, arranged in an array comprising a plurality of rows, the plurality of rows comprising at least one first row; and
a plurality of microlenses, arranged in an array so that light emitted from each of the plurality of light emitting units passes through a corresponding one of the plurality of microlenses, each of the plurality of microlenses having an optical axis;
wherein light from a light emitting unit in a particular row passes through a corresponding microlens at an angle to the optical axis, and the angle varies as a function of a distance between the particular row and the at least one first row.

It should be appreciated from the foregoing that some embodiments of the invention provide an image display device, comprising: a plurality of light emitting units, arranged in an array comprising a plurality of rows extending in a first direction, each of the plurality of light emitting units having an optical axis; and a plurality of microlenses, arranged in an array so that light emitted from each of the plurality of light emitting units passes through a corresponding one of the plurality of microlenses, each of the plurality of microlenses having an optical axis; wherein the optical axis of light emitting units in at least one of the plurality of rows is offset from the optical axis of the corresponding microlenses in the at least one of the plurality of rows.

According to the invention the plurality of rows of light emitting units comprises at least one first row, and an offset between the optical axis of a light emitting unit in a particular row and the optical axis of a corresponding microlens may vary as function of a distance between the particular row and the at least one first row. According to the invention, an offset between the optical axis of a light emitting unit in the particular row and the optical axis of a corresponding microlens increases as the distance between the particular row and the at least one first row increases. The at least one first row may, for example, reside substantially in a center of the plurality of rows.

The plurality of rows of light emitting units may comprise rows below the at least one first row in the array, and the optical axes of light emitting units in the rows below the at least one first row may reside at an offset above the optical axis of corresponding microlenses. The plurality of rows of light emitting units may comprise rows above the at least one first row in the array, and the optical axes of light emitting units in the rows above the at least one first row may reside at an offset below the optical axis of corresponding microlenses.

The plurality of rows of light emitting units may comprise a first row, a second row adjacent the first row in the array, and a third row adjacent the second row in the array, and a first distance between an optical axis of light emitting units in the first row and an optical axis of light emitting units in the second row is greater than a second distance between an optical axis of light emitting units in the second row and an optical axis of light emitting units in the third row. The first row may, for example, reside substantially in a center of the plurality of rows. In some embodiments, the second row may reside above the first row in the array, and the third row may reside above the second row in the array. In other embodiments, the second row may reside below the first row in the array, and the third row may reside below the second row in the array.

The plurality of rows may comprise at least one edge row farthest away from the at least one first row in the array, and the at least one of the plurality of rows in which the optical axis of light emitting units is different than the optical axis of the corresponding microlenses may comprise the at least one edge row. In some embodiments, the at least one edge row may comprise a row below the at least one first row in the array, and the optical axis of light emitting units in the at least one edge row may reside above the optical axis of the corresponding microlenses. In other embodiments, the at least one edge row may comprise a row above the at least one first row in the array, and the optical axis of light emitting units in the at least one edge row may reside below the optical axis of the corresponding microlenses.

In some embodiments, the array in which the plurality of light emitting units are arranged may comprise a plurality of columns.

Some embodiments of the invention provide a head-mounted display, comprising: an eyeglass type frame configured for mounting on a head; and an image display device, affixed to the eyeglass type frame. The head-mounted display may comprise an optical waveguide configured to propagate light from the light emitting unit along the first direction. In some embodiments, the image display device may be affixed to the eyeglass type frame so that, when the eyeglass type frame is mounted on a head, the first direction in which the plurality of rows extends is substantially horizontal. In other embodiments, the image display device may be affixed to the eyeglass type frame so that, when the eyeglass type frame is mounted on a head, the first direction in which the plurality of rows extends is substantially vertical.

Some embodiments of the invention provide a head-mounted display, comprising: an optical system; an optical waveguide; a first diffraction grating and a second diffraction grating, each residing on a portion of the optical waveguide; a frame, configured for mounting on a head; and an image display device, affixed to the frame.

Some embodiments of the invention provide an image display device, comprising: a plurality of light emitting units, arranged in an array comprising a plurality of rows, the plurality of rows comprising at least one first row; and a plurality of microlenses, arranged in an array so that light emitted from each of the plurality of light emitting units passes through a corresponding one of the plurality of microlenses, each of the plurality of microlenses having an optical axis; wherein light from a light emitting unit in a particular row passes through a corresponding microlens at an angle to the optical axis, and the angle varies as a function of a distance between the particular row and the at least one first row.

The present disclosure contains subject matter related to that disclosed in Japanese Priority Patent Application JP 2012-057452 filed in the Japan Patent Office on March 14, 2012.

**Claims**

1. An image display device (100), comprising:

   a plurality of light emitting units (153), arranged in an array comprising a plurality of rows extending in a first direction, each of the plurality of light emitting units having an optical axis; and
   a plurality of microlenses (61), arranged in an array so that light emitted from each of the plurality of light emitting units passes through a corresponding one of the plurality of microlenses, each of the plurality of microlenses having an optical axis;
   wherein the optical axis of light emitting units in at least one of the plurality of rows is offset from the optical axis of the corresponding microlenses in the at least one of the plurality of rows, wherein
   the plurality of rows of light emitting units comprises at least one first row, and an offset between the optical axis of a light emitting unit in a particular row and the optical axis of a corresponding microlens varies as function of a distance between the particular row and the at least one first row; **rand characterised in that**
   an offset between the optical axis of a light emitting unit in the particular row and the optical axis of a corresponding microlens increases as the distance between the particular row and the at least one first row increases.

2. The image display device of claim 1, wherein the plurality of rows of light emitting units comprises one or more selected from the group comprising: rows below the at least one first row in the array wherein the optical axes of light emitting units in the rows below the at least one first row reside at an offset above the optical axis of corresponding microlenses; and rows above the at least one first row in the array wherein the optical axes of light emitting units in the rows above the at least one first row reside at an offset below the optical axis of corresponding microlenses.

3. The image display device of claim 1 or 2, wherein the at least one first row resides substantially in a center of the plurality of rows.

4. The image display device of any preceding claim, wherein the plurality of rows of light emitting units comprises a first row, a second row adjacent the first row in the array, and a third row adjacent the second row in the array, and a first distance between an optical axis of light emitting units in the first row and an optical axis of light emitting units in the second row is greater than a second distance between an optical axis of light emitting units in the second row and an optical axis of light emitting units in the third row.

5. The image display device of claim 3, comprising one or more selected from the group comprising: wherein the first row resides substantially in a center of the plurality of rows; wherein the second row resides above the first row in the array and the third row resides above the second row in the array; and wherein the second row resides below the first row in the array and the third row resides below the second row in the array.

6.  The image display device of any preceding claim, wherein the plurality of rows comprises at least one edge row farthest away from the at least one first row in the array, and the at least one of the plurality of rows in which the optical axis of light emitting units is different than the optical axis of the corresponding microlenses comprises the at least one edge row.

7.  The image display device of claim 6, wherein the at least one edge row comprises one or more selected from the group comprising: a row below the at least one first row in the array wherein the optical axis of light emitting units in the at least one edge row resides above the optical axis of the corresponding microlenses; and a row above the at least one first row in the array wherein the optical axis of light emitting units in the at least one edge row resides below the optical axis of the corresponding microlenses.

8.  The image display device of any preceding claim, wherein the array in which the plurality of light emitting units are arranged comprises a plurality of columns.

9.  A head-mounted display, comprising:

    an eyeglass type frame (10) configured for mounting on a head; and
    the image display device of any preceding claim, affixed to the eyeglass type frame.

10.  The head-mounted display of claim 9, further comprising an optical waveguide (321) configured to propagate light from the light emitting unit along the first direction.

11.  The head-mounted display of claim 9 or 10, wherein the image display device is affixed to the eyeglass type frame so that, when the eyeglass type frame is mounted on a head, the first direction in which the plurality of rows extends is substantially horizontal.

12.  The head-mounted display of claim 9, 10 or 11, wherein the image display device is affixed to the eyeglass type frame so that, when the eyeglass type frame is mounted on a head, the first direction in which the plurality of rows extends is substantially vertical.

13.  A head-mounted display, comprising:

    an optical system (112);
    an optical waveguide (321);

a first diffraction grating (330) and a second diffraction grating (340), each residing on a portion of the optical waveguide;
a frame (10), configured for mounting on a head; and
the image display device of any preceding claim, affixed to the frame.

**Patentansprüche**

1.  Bildanzeigevorrichtung (100) umfassend:

    mehrere lichtemittierende Einheiten (153), die in einem Array angeordnet sind, das mehrere sich in einer ersten Richtung erstreckende Reihen umfasst, wobei jede der mehreren lichtemittierenden Einheiten eine optische Achse aufweist; und
    mehrere Mikrolinsen (61), die in einem Array angeordnet sind, so dass von jeder der mehreren lichtemittierenden Einheiten emittiertes Licht durch eine entsprechende der mehreren Mikrolinsen hindurchgeht, wobei jede der mehreren Mikrolinsen eine optische Achse aufweist;
    wobei die optische Achse der lichtemittierenden Einheiten in mindestens einer der mehreren Reihen von der optischen Achse der entsprechenden Mikrolinsen in der mindestens einen der mehreren Reihen versetzt ist, wobei die mehreren Reihen von lichtemittierenden Einheiten mindestens eine erste Reihe umfassen, und ein Versatz zwischen der optischen Achse einer lichtemittierenden Einheit in einer betreffenden Reihe und der optischen Achse einer entsprechenden Mikrolinse als Funktion eines Abstands zwischen der betreffenden Reihe und der mindestens einen ersten Reihe variiert; **und dadurch gekennzeichnet, dass**
    ein Versatz zwischen der optischen Achse einer lichtemittierenden Einheit in der betreffenden Reihe und der optischen Achse einer entsprechenden Mikrolinse mit zunehmendem Abstand zwischen der betreffenden Reihe und der mindestens einen ersten Reihe zunimmt.

2.  Bildanzeigevorrichtung nach Anspruch 1, wobei die mehreren Reihen lichtemittierender Einheiten eine oder mehrere aus der Gruppe ausgewählte umfassen, umfassend:
    Reihen unterhalb der mindestens einen ersten Reihe in dem Array, wobei die optischen Achsen der lichtemittierenden Einheiten in den Reihen unterhalb der mindestens einen ersten Reihe mit einem Versatz oberhalb der optischen Achse der entsprechenden Mikrolinsen liegen; und Reihen oberhalb der mindestens einen ersten Reihe in dem Array, wobei die optischen Achsen der lichtemittierenden Einheiten in den Reihen oberhalb der mindestens einen ersten Reihe mit einem Versatz unterhalb der optischen Achse der entsprechenden Mikrolinsen liegen.

3. Bildanzeigevorrichtung nach Anspruch 1 oder 2, wobei die mindestens eine erste Reihe im Wesentlichen in einer Mitte der mehreren Reihe liegt.

4. Bildanzeigevorrichtung nach einem der vorhergehenden Ansprüche, wobei die mehreren Reihen von lichtemittierenden Einheiten eine erste Reihe, eine zweite Reihe neben der ersten Reihe in dem Array und eine dritte Reihe neben der zweiten Reihe in dem Array umfassen und ein erster Abstand zwischen einer optischen Achse von lichtemittierenden Einheiten in der ersten Reihe und einer optischen Achse von lichtemittierenden Einheiten in der zweiten Reihe größer ist als ein zweiter Abstand zwischen einer optischen Achse von lichtemittierenden Einheiten in der zweiten Reihe und einer optischen Achse von lichtemittierenden Einheiten in der dritten Reihe.

5. Bildanzeigevorrichtung nach Anspruch 3, umfassend eine oder mehrere aus der Gruppe ausgewählte, umfassend:
wobei die erste Reihe im Wesentlichen in einer Mitte der mehreren Reihen liegt; wobei die zweite Reihe oberhalb der ersten Reihe in dem Array liegt und die dritte Reihe oberhalb der zweiten Reihe in dem Array liegt; und wobei die zweite Reihe unterhalb der ersten Reihe in dem Array liegt und die dritte Reihe unterhalb der zweiten Reihe in dem Array liegt.

6. Bildanzeigevorrichtung nach einem der vorhergehenden Ansprüche, wobei die mehreren Reihen mindestens eine Randreihe umfassen, die am weitesten von der mindestens einen ersten Reihe in dem Array entfernt ist, und die mindestens eine der mehreren Reihen, in denen die optische Achse der lichtemittierenden Einheiten von der optischen Achse der entsprechenden Mikrolinsen verschieden ist, die mindestens eine Randreihe umfasst.

7. Bildanzeigevorrichtung nach Anspruch 6, wobei die mindestens eine Randreihe eine oder mehrere aus der Gruppe ausgewählte umfasst, umfassend: eine Reihe unterhalb der mindestens einen ersten Reihe in dem Array, wobei die optische Achse der lichtemittierenden Einheiten in der mindestens einen Randreihe oberhalb der optischen Achse der entsprechenden Mikrolinsen liegt; und eine Reihe oberhalb der mindestens einen ersten Reihe in dem Array, wobei die optische Achse der lichtemittierenden Einheiten in der mindestens einen Randreihe unterhalb der optischen Achse der entsprechenden Mikrolinsen liegt.

8. Bildanzeigevorrichtung nach einem der vorhergehenden Ansprüche, wobei das Array, in dem die mehreren lichtemittierenden Einheiten angeordnet sind, mehrere Spalten umfasst.

9. Am Kopf angebrachte Anzeige, umfassend:

einen brillenartigen Rahmen (10), der dazu ausgelegt ist, an einem Kopf angebracht zu werden; und
die Bildanzeigevorrichtung nach einem der vorhergehenden Ansprüche, die an dem brillenartigen Rahmen befestigt ist.

10. Am Kopf angebrachte Anzeige nach Anspruch 9, die ferner einen optischen Wellenleiter (321) umfasst, der dazu ausgelegt ist, Licht von der lichtemittierenden Einheit entlang der ersten Richtung auszubreiten.

11. Am Kopf angebrachtes Anzeige nach Anspruch 9 oder 10, wobei die Bildanzeigevorrichtung an dem brillenartigen Rahmen befestigt ist, so dass, wenn der brillenartige Rahmen an einem Kopf angebracht ist, die erste Richtung, in der sich die mehreren Reihen erstrecken, im Wesentlichen horizontal ist.

12. Am Kopf angebrachtes Anzeige nach Anspruch 9, 10 oder 11, wobei die Bildanzeigevorrichtung an dem brillenartigen Rahmen befestigt ist, so dass, wenn der brillenartige Rahmen an einem Kopf angebracht ist, die erste Richtung, in der sich die mehreren Reihen erstrecken, im Wesentlichen vertikal ist.

13. Am Kopf angebrachte Anzeige, umfassend: ein optisches System (112);
einen optischen Wellenleiter (321);
ein erstes Beugungsgitter (330) und ein zweites Beugungsgitter (340), die jeweils auf einem Abschnitt des optischen Wellenleiters liegen;
einen Rahmen (10), der dazu ausgelegt ist, an einem Kopf angebracht zu werden; und
die Bildanzeigevorrichtung nach einem der vorhergehenden Ansprüche, die an dem Rahmen befestigt ist.

**Revendications**

1. Dispositif d'affichage d'image (100), comprenant :

une pluralité d'unités d'émission de lumière (153), agencées en une matrice comprenant une pluralité de rangées s'étendant dans une première direction, chacune de la pluralité d'unités d'émission de lumière ayant un axe optique ; et

une pluralité de microlentilles (61), agencées en une matrice de manière à ce que la lumière émise par chacune de la pluralité d'unités d'émission de lumière passe à travers une microlentille correspondante de la pluralité de microlentilles, chacune de la pluralité de microlentilles ayant un axe optique ;

dans lequel l'axe optique des unités d'émission de lumière dans au moins l'une de la pluralité de rangées est décalé par rapport à l'axe optique des microlentilles correspondantes dans l'au moins une de la pluralité de rangées, dans lequel

la pluralité de rangées d'unités d'émission de lumière comprend au moins une première rangée, et un décalage entre l'axe optique d'une unité d'émission de lumière dans une rangée particulière et l'axe optique d'une microlentille correspondante varie en fonction d'une distance entre la rangée particulière et l'au moins une première rangée ; et

**caractérisé en ce qu'**un décalage entre l'axe optique d'une unité d'émission de lumière située dans la rangée particulière et l'axe optique d'une microlentille correspondante augmente lorsque la distance entre la rangée particulière et l'au moins une première rangée augmente.

2. Dispositif d'affichage d'image selon la revendication 1, dans lequel la pluralité de rangées d'unités d'émission de lumière comprend un ou plusieurs éléments sélectionnés dans le groupe comprenant : des rangées situées en dessous de l'au moins une première rangée dans la matrice, les axes optiques des unités d'émission de lumière dans les rangées situées en dessous de l'au moins une première rangée se trouvant décalés au-dessus de l'axe optique des microlentilles correspondantes ; et des rangées situées au-dessus de l'au moins une première rangée dans la matrice, les axes optiques des unités d'émission de lumière dans les rangées situées au-dessus de l'au moins une première rangée étant décalés par rapport à l'axe optique des microlentilles correspondantes.

3. Dispositif d'affichage d'image selon la revendication 1 ou 2, dans lequel l'au moins une première rangée se trouve sensiblement au centre de la pluralité de rangées.

4. Dispositif d'affichage d'image selon l'une quelconque des revendications précédentes, dans lequel la pluralité de rangées d'unités d'émission de lumière comprend une première rangée, une deuxième rangée adjacente à la première rangée dans la matrice, et une troisième rangée adjacente à la deuxième rangée dans la matrice, et une première distance entre un axe optique des unités d'émission de lumière dans la première rangée et un axe optique des unités d'émission de lumière dans la deuxième rangée est supérieure à une deuxième distance entre un axe optique des unités d'émission de lumière dans la deuxième rangée et un axe optique des unités d'émission de lumière dans la troisième rangée.

5. Dispositif d'affichage d'image selon la revendication 3, comprenant un ou plusieurs éléments choisis dans le groupe : dans lequel la première rangée se trouve sensiblement au centre de la pluralité de rangées ; dans lequel la deuxième rangée se trouve au-dessus de la première rangée dans la matrice et la troisième rangée se trouve au-dessus de la deuxième rangée dans la matrice ; et dans lequel la deuxième rangée se trouve en dessous de la première rangée dans la matrice et la troisième rangée se trouve en dessous de la deuxième rangée dans la matrice.

6. Dispositif d'affichage d'image selon l'une quelconque des revendications précédentes, dans lequel la pluralité de rangées comprend au moins une rangée de bord la plus éloignée de l'au moins une première rangée dans la matrice, et l'au moins une de la pluralité de rangées dans laquelle l'axe optique des unités d'émission de lumière est différent de l'axe optique des microlentilles correspondantes comprend l'au moins une rangée de bord.

7. Dispositif d'affichage d'image selon la revendication 6, dans lequel l'au moins une rangée de bord comprend une ou plusieurs rangées sélectionnées dans le groupe comprenant : une rangée située en dessous de l'au moins une première rangée dans la matrice, l'axe optique des unités d'émission de lumière dans l'au moins une rangée de bord se trouvant au-dessus de l'axe optique des microlentilles correspondantes ; et une rangée située au-dessus de l'au moins une première rangée dans la matrice, l'axe optique des unités d'émission de lumière dans l'au moins une rangée de bord se trouvant en dessous de l'axe optique des microlentilles correspondantes.

8. Dispositif d'affichage d'image selon l'une quelconque des revendications précédentes, dans lequel la matrice dans laquelle sont agencées la pluralité d'unités d'émission de lumière comprend une pluralité de colonnes.

9. Visiocasque, comprenant :

une monture de type lunettes (10) configurée pour être montée sur une tête ; et
le dispositif d'affichage d'image selon l'une quelconque des revendications précédentes, fixé à la monture de type lunettes.

**10.** Visiocasque selon la revendication 9, comprenant en outre un guide d'ondes optique (321) configuré pour propager la lumière provenant de l'unité d'émission de lumière dans la première direction.

**11.** Visiocasque selon la revendication 9 ou 10, dans lequel le dispositif d'affichage d'image est fixé à la monture de type lunettes de telle sorte que, lorsque la monture de type lunettes est montée sur une tête, la première direction dans laquelle s'étendent la pluralité de rangées est sensiblement horizontale.

**12.** Visiocasque selon la revendication 9, 10 ou 11, dans lequel le dispositif d'affichage d'image est fixé à la monture de type lunettes de telle sorte que, lorsque la monture de type lunettes est montée sur une tête, la première direction dans laquelle s'étendent la pluralité de rangées est sensiblement verticale.

**13.** Visiocasque, comprenant :

un système optique (112) ;
un guide d'ondes optique (321) ;
un premier réseau de diffraction (330) et un deuxième réseau de diffraction (340), dont chacun se trouve sur une partie du guide d'ondes optique ;
une monture (10), configurée pour être montée sur une tête ; et
le dispositif d'affichage d'image selon l'une quelconque des revendications précédentes, fixé à la monture.

## FIG. 1

(EMBODIMENT 1)

# FIG. 2

（A）

（B）

# FIG. 3

(A)

(B)

# FIG. 4

（A）

112
COLLIMATING OPTICAL SYSTEM

60
LIGHT OUTPUT ANGLE
CONTROL MEMBER/
MICROLENS ARRAY

$R_3$

$R_3'$

PUPIL POSITION

$\omega_1$
$\omega_0$

PUPIL

$\fallingdotseq L_1 + L_2 / \sin(\Phi) + L_3$

111
IMAGE GENERATING DEVICE

（B）

$153_E$

$152$

$153_C$

$153_E$

（C）

120,
320

Y
X
$\zeta$
Z

CENTRAL INCIDENT LIGHT BEAM

LIGHT-GUIDE-UNIT
CENTER POINT O

（D）

120,
320

Y
X
Z
$\theta_{Z0}$

$\eta$
$\zeta$
$\xi$

CENTRAL INCIDENT LIGHT BEAM

LIGHT-GUIDE-UNIT
CENTER POINT O

EP 2 639 623 B1

# FIG. 5

18 CONTROL DEVICE

15

15

16'

14 EAR BEND PORTION

14

16'

16

16 HEADPHONE UNIT

13 TEMPLE PORTION

10 FRAME

13

15+16'

113 HOUSING

12 HINGE

11 FRONT PORTION

17 IMAGING DEVICE

11'

12

19

111A,211

120,320 LIGHT GUIDE UNIT

120,320

111B,211 IMAGE GENERATING DEVICE

100, 200, 300, 400 IMAGE DISPLAY DEVICE

100, 200, 300, 400

# FIG. 6

EP 2 639 623 B1

FIG. 7

35

# FIG. 8    IMAGE

EP 2 639 623 B1

# FIG. 9
## (EMBODIMENT 2)

140 SECOND DEFLECTING UNIT

121 LIGHT GUIDE PLATE

123

130 FIRST DEFLECTING UNIT

124

125

122

254 RELAY OPTICAL SYSTEM

120 LIGHT GUIDE UNIT

CL

256

60 LIGHT OUTPUT ANGLE CONTROL MEMBER/ MICROLENS ARRAY

252 COLLIMATING OPTICAL SYSTEM

200 IMAGE DISPLAY DEVICE

253 SCANNING UNIT

21 PUPIL

211 IMAGE GENERATING DEVICE

213 HOUSING

251 LIGHT SOURCE

37

# FIG. 10
(EMBODIMENT 3)

340
SECOND DIFFRACTION GRATING MEMBER

INTERFERENCE FRINGE

INTERFERENCE FRINGE

323

330
FIRST DIFFRACTION GRATING MEMBER

(A)

112
COLLIMATING OPTICAL SYSTEM

322

321
LIGHT GUIDE PLATE

CL

113
HOUSING

320
LIGHT GUIDE UNIT

300
IMAGE DISPLAY DEVICE

Y ← ⊗ Z
X

60
LIGHT OUTPUT ANGLE
CONTROL MEMBER/
MICROLENS ARRAY

111
IMAGE GENERATING DEVICE

21 PUPIL

REFLECTIVE VOLUME
HOLOGRAM DIFFRACTION GRATING

INTERFERENCE
FRINGE

(B)

152
POLARIZATION
BEAM SPLITTER

154 LIGHT SOURCE

151 LCD DEVICE

150 REFLECTIVE SPATIAL LIGHT
MODULATING DEVICE

Θ
ψ   φ

d

FIG. 11

(EMBODIMENT 4)

340
SECOND DIFFRACTION GRATING MEMBER

INTERFERENCE FRINGE   330
FIRST DIFFRACTION GRATING MEMBER

INTERFERENCE FRINGE

323

322

321
LIGHT GUIDE PLATE

254
RELAY
OPTICAL
SYSTEM

CL

256

320
LIGHT
GUIDE UNIT

252
COLLIMATING OPTICAL SYSTEM

60
LIGHT OUTPUT ANGLE
CONTROL MEMBER/
MICROLENS ARRAY

400
IMAGE DISPLAY
DEVICE

21 PUPIL

253
SCANNING UNIT

211
IMAGE
GENERATING
DEVICE

213
HOUSING

251
LIGHT SOURCE

Y
Z
X

# FIG. 12
## (EMBODIMENT 5)

10
FRAME

11
FRONT PORTION 12 19 13
TEMPLE PORTION 14 EAR BEND PORTION

$\theta_{Z0}$

$\theta'_{Z0}$

120
LIGHT GUIDE UNIT

CL'

CL

113
HOUSING

111 IMAGE GENERATING DEVICE

$2\theta_{Z0}$

# FIG. 13
## (EMBODIMENT 6)

17
IMAGING DEVICE

10
FRAME

500
IMAGE DISPLAY DEVICE

11' CENTER PORTION

11 FRONT PORTION

12 HINGE

13
TEMPLE PORTION

12

13

14

14
EAR BEND PORTION

TO CONTROL
DEVICE ← 15

15 TO CONTROL
→ DEVICE

16'

16'

16

16

111A

113 HOUSING

21
PUPIL

111B
IMAGE GENERATING
DEVICE

10'

521

20

520
SEMI-TRANSMISSIVE MIRROR

# FIG. 14

## (EMBODIMENT 6)

TO CONTROL DEVICE

15

16'

14 EAR BEND PORTION

16
HEADPHONE UNIT

13 TEMPLE PORTION

12
HINGE

111A

10
FRAME

521 520

11'
CENTER PORTION

520

17
IMAGING DEVICE

113
HOUSING

SEMI-TRANSMISSIVE MIRROR

TO CONTROL DEVICE

15

16'

14

13

16

15+16'

111B
IMAGE GENERATING DEVICE

12

521

11 FRONT PORTION

500 IMAGE DISPLAY DEVICE

# FIG. 15

## (EMBODIMENT 7)

# FIG. 16

(EMBODIMENT 7)

70
CONNECTING MEMBER

113 HOUSING

111B
IMAGE GENERATING
DEVICE

120
LIGHT GUIDE UNIT

20

111A

21
PUPIL

10'

EP 2 639 623 B1

# FIG. 17
(EMBODIMENT 7)

TO EXTERNAL CIRCUIT

15

16'

16
HEADPHONE UNIT

14 EAR BEND PORTION

13 TEMPLE PORTION

TO EXTERNAL CIRCUIT

15

16'

14

13

16

15 + 16'

17
IMAGING DEVICE

111B
IMAGE GENERATING DEVICE

111A

70
CONNECTING MEMBER

113
HOUSING

12
HINGE

12

10A

10A

10
FRAME

120
LIGHT GUIDE UNIT

11'
CENTER PORTION

120

11
FRONT PORTION

111A c

70 c

111B c

$\alpha$

$\beta$

$\gamma$

L

# FIG. 18
(EMBODIMENT 8)

80
CONNECTING MEMBER

17
IMAGING DEVICE

11' CENTER PORTION

10
FRAME

11 FRONT PORTION

12 HINGE

10A
END PORTION

13
TEMPLE PORTION

12

13

14

14 EAR BEND
PORTION

TO CONTROL
DEVICE

15

TO CONTROL
DEVICE

15

16'

16'

16

16

111A

113 HOUSING

21
PUPIL

111B
IMAGE GENERATING
DEVICE

10'

120
LIGHT GUIDE UNIT

20

## FIG. 19
### (EMBODIMENT 8)

80
CONNECTING MEMBER

111A

21
PUPIL

10'

113 HOUSING
111B
IMAGE GENERATING
DEVICE
120
LIGHT GUIDE UNIT

20

# FIG. 20

## (EMBODIMENT 8)

TO CONTROL DEVICE

15

16'

14 EAR BEND PORTION

16
HEADPHONE UNIT

13 TEMPLE PORTION

TO CONTROL DEVICE

15

16'

14

16

13

15+16'

111B
IMAGE GENERATING DEVICE

17
IMAGING DEVICE

111A

80
CONNECTING MEMBER

12
HINGE

~113
HOUSING

12

10A

10A

10
FRAME

120
LIGHT GUIDE UNIT

11'
CENTER PORTION

120

11
FRONT PORTION

111A c

80 c

111B c

$\alpha'$

$\beta'$

$\gamma'$

L

# FIG. 21

COLUMN DRIVER (PWM)

ROW DRIVER

501
SEMICONDUCTOR LIGHT EMITTING ELEMENT

# FIG. 22

511B

501B

512

511R

501R

511G

501G

503

TO LIGHT GUIDE UNIT

## FIG. 23

511B
501B
504B
511R
504R
504R
512
501R
504G
501G
511G
503

TO LIGHT GUIDE UNIT

EP 2 639 623 B1

# FIG. 24

511B — 501B

512

511R

503

TO LIGHT GUIDE UNIT

504

501R

501G

511G

52

# FIG. 25

504B 502
504R
501B
503
TO LIGHT GUIDE UNIT
504G
502
502
501G
501R

# FIG. 26

140 SECOND DEFLECTING UNIT   121
(LIGHT GUIDE PLATE

130
FIRST DEFLECTING UNIT

112
COLLIMATING OPTICAL SYSTEM

120
LIGHT GUIDE UNIT

111
IMAGE GENERATING DEVICE

1100
IMAGE DISPLAY DEVICE

21 PUPIL

# FIG. 27

340
SECOND DIFFRACTION GRATING MEMBER

INTERFERENCE FRINGE

INTERFERENCE FRINGE

323

330
FIRST DIFFRACTION GRATING MEMBER

321
LIGHT GUIDE PLATE

322

320
LIGHT GUIDE UNIT

1300
IMAGE DISPLAY DEVICE

112
COLLIMATING OPTICAL SYSTEM

$r_1$   $r_2$   $r_3$

111
IMAGE GENERATING DEVICE

21 PUPIL

# FIG. 28

Y⊙→X

Z

112
COLLIMATING OPTICAL SYSTEM

R₃

330
FIRST DIFFRACTION
GRATING MEMBER

R₂

R₁

111
IMAGE GENERATING DEVICE

321 LIGHT GUIDE PLATE

320
LIGHT GUIDE UNIT

1300
IMAGE DISPLAY DEVICE

# FIG. 29

(A)

112
COLLIMATING OPTICAL SYSTEM

PUPIL POSITION

$R_3'$

PUPIL

$\fallingdotseq L_1 + L_2 / sin (\Phi) + L_3$

111
IMAGE GENERATING
DEVICE

(B)

Z'

121
LIGHT GUIDE PLATE

122

-X'

Y

Z

21 PUPIL

-X

$L_2$

$L_3$

O

-Y

$L_1$

CL
CENTRAL INCIDENT
LIGHT BEAM

112 COLLIMATING OPTICAL SYSTEM

# FIG. 30

MOUNTING MEMBER    FRAME

FRONT PORTION    TEMPLE PORTION    EAR BEND PORTION

$\theta_{Z0}''$

CL

$\theta_{Z0}''$

120
LIGHT GUIDE UNIT

111
IMAGE GENERATING DEVICE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006162767 A
- JP 2007094175 A
- US 20050280783 A
- US 20050281029 A
- EP 2065751 A
- JP 10170859 A
- JP 2005521099 PCT
- US 20040062505 A1
- JP 2012057452 A